# FASCICULE DE BREVET EUROPEEN

(11) **EP 1 677 914 B1**
(45) Date de publication et mention de la délivrance du brevet: **05.12.2007**
(21) Numéro de dépôt: 04805770.7
(22) Date de dépôt: 21.10.2004
(51) Int. Cl.: B01L 3/00, B01J 19/00

(54) **PROCEDE DE REPARTITION DE GOUTTES D UN LIQUIDE D INTERET SUR UNE SURFACE**
VERFAHREN ZUR VERTEILUNG VON TROPFEN EINER BETREFFENDEN FLÜSSIGKEIT AUF EINER FLÄCHE
METHOD FOR DISTRIBUTING DROPS OF A LIQUID OF INTEREST ON A SURFACE

(30) Priorité: 31.10.2003 FR 0350763
(43) Date de publication de la demande: 12.07.2006
(73) Titulaire: COMMISSARIAT A L'ENERGIE ATOMIQUE, 75015 Paris (FR); BIOMERIEUX SA, 69280 Marcy l'Etoile (FR)
(72) Inventeur: DELATTRE, Cyril, F-38100 GRENOBLE (FR); MARCHAND, Gilles, F-38119 PIERRE CHATEL (FR); POUTEAU, Patrick, F-38240 MEYLAN (FR); GINOT, Frédéric, F-38120 SAINT EGREVE (FR)
(74) Mandataire: Poulin, Gérard
(86) Numéro de dépôt international: PCT/FR2004/050527
(87) Numéro de publication internationale: WO 2005/042164

(56) Documents cités:
- WO-A-02/41992
- WO-A-03/059518
- US-A- 6 143 496
- US-B1- 6 210 894
- US-B1- 6 565 813

## Description

### Domaine technique

La présente invention se rapporte à un procédé de répartition localisée de gouttes d'un liquide d'intérêt sur une surface active, à l'utilisation de ce procédé dans un laboratoire sur puce ou dans un microsystème pour la chimie ou la biologie. La présente invention se rapporte également à des procédés de détection électrique, électrochimique, chimique et optique d'au moins un composé susceptible d'être présent dans une goutte d'un liquide d'intérêt, et à un procédé d'électropolymérisation de molécules présentes dans un liquide d'intérêt.

La présente invention permet d'obtenir une matrice de gouttes localisées, à haute densité, sur une surface, à partir d'un liquide d'intérêt. Elle permet d'assurer facilement la transition d'une chambre fluidique, appelée boite, et remplie par un liquide d'intérêt à une matrice de gouttes, ou micro-volumes, parfaitement localisées sur une surface placée dans ladite chambre fluidique, lorsque le liquide d'intérêt est évacué de ladite chambre fluidique.

Par matrice de gouttes, on entend un arrangement déterminé desdites gouttes, sans qu'une forme géométrique particulière dudit arrangement soit exigée. La matrice de gouttes peut être ronde, carrée, polygonale et même aléatoire, l'essentiel étant que les gouttes formées soient disposées de manière localisée et déterminée sur la surface conformément à l'objectif atteint par la présente invention. Par localisée, on entend circonscrite, individualisée et distincte des autres gouttes capturées volontairement sur ladite surface grâce au procédé de l'invention.

Chacune des gouttes peut être soumise à une ou plusieurs opérations destinées à analyser qualitativement et/ou quantitativement un ou plusieurs analyte(s) présent (s) ou susceptible (s) d'être présent(s) dans le liquide d'intérêt, par exemple une molécule, un oligonucléotide, une protéine, etc. L'analyse des analytes dans la goutte peut être réalisée par toute technique connue de l'homme du métier pour effectuer des analyses, en particulier dans un volume de liquide aussi réduit qu'une goutte. Il peut s'agir des techniques d'analyse utilisées sur les puces biologiques. L'analyse peut ou non faire intervenir la surface du dispositif de l'invention recouverte par la goutte, suivant la mise en oeuvre de la présente invention.

Chacune des gouttes forme un volume dans lequel des réactions chimiques ou biochimiques peuvent être réalisées. Toute réaction chimique ou biochimique connue de l'homme du métier peut être réalisée dans ce volume. Ces réactions peuvent ou non faire intervenir la surface du dispositif de l'invention recouverte par la goutte, suivant la mise en oeuvre de la présente invention. Lorsque ces réactions font intervenir la surface du dispositif de l'invention recouverte par la goutte, elles peuvent le faire avec une seule goutte ou plusieurs gouttes déposées successivement sur cette surface, ces gouttes successives étant constituées d'un seul ou de plusieurs liquides d'intérêt différents suivant la mise en oeuvre de la présente invention. Un exemple de réactions chimiques faisant par exemple intervenir deux liquides d'intérêt différents sur un dispositif de l'invention est le suivant : au moyen d'une goutte d'un premier liquide d'intérêt, dépôt localisé d'un film d'un polymère organique sur la surface couverte par cette goutte, puis, au moyen d'une goutte d'un deuxième liquide d'intérêt, fonctionnalisation du film polymère organique déposé sur cette surface.

Selon la présente invention, analyse(s) et réaction(s) chimique(s)/biochimique(s) peuvent être mises en oeuvre de manière exclusive sur un dispositif conforme à la présente invention (analyse ou réaction), ou de manière complémentaire. Dans ce dernier cas, cela peut être simultanément (réaction et analyse) ou successivement (réaction puis analyse ou analyse puis réaction). En outre, plusieurs analyses et/ou plusieurs réactions peuvent se succéder. Par exemple, le dispositif de la présente invention peut avantageusement intervenir, d'une part dans la fabrication d'une carte, ou laboratoire sur puce (par exemple par des réactions chimiques permettant de déposer un polymère, puis de le fonctionnaliser) (« lab-on-chip »), dans laquelle toutes les étapes nécessaires aux analyses qualitatives et quantitatives d'un liquide d'intérêt sont intégrées : manipulation de fluide, réactions chimiques et/ou biochimiques, puce de détection optique, électrique et/ou chimique, etc. ; et d'autre part dans l'utilisation de cette carte, ou laboratoire sur puce, pour effectuer des analyses qualitatives et/ou quantitatives dans des gouttes d'un liquide d'intérêt à analyser (réaction(s) chimique(s)/biochimique(s) et analyse).

Dans la présente description, les références entre crochets **[ ]** renvoient à la liste de références annexée.

### Art antérieur

Selon les applications envisagées, cette invention se rapproche du domaine général de la formation de gouttes, du travail en micro-volume(s), des matrices à haute densité de gouttes.

La formation de zones localisées pour isoler une phase liquide est répandue dans le domaine des puces biologiques, et notamment des puces à ADN. Pour ces applications, le volume réactionnel est souvent très réduit pour économiser les produits biologiques et les réactifs.

Pour la formation de gouttes localisées et de matrices à haute densité de gouttes, les sociétés Protogene Laboratories Inc. **[1]** et Affymetrix Inc. **[2]** utilisent une technique utilisant un système de dispense automatisé. Ces systèmes conduisent à la formation de gouttes et de matrices à haute densité de plots ou de gouttes sur une surface.

Cependant, outre le système de dispense de gouttes, ces techniques nécessitent toutes l'utilisation d'un dispositif de déplacement et d'alignement précis de ce système, ainsi qu'un dispositif pour l'alimentation en liquide. Le coût de cet appareillage est élevé. En outre, la densité maximale des matrices de gouttes qui peuvent être formées est limitée par une combinaison entre la taille des gouttes dispensées et le pas minimal inter-plot du système de dispense.

Pour la formation de matrices à haute densité de micro-cuvettes, deux familles de procédés significatifs peuvent être cités : la famille des procédés utilisant la formation d'un réseau de cuvettes micro-fabriquées par gravure dans une plaque de silicium pour réaliser des amplifications d'ADN par PCR en micro-volumes de quelques picolitres, et la famille des procédés utilisant la formation de puits ou de canaux par photolithographie sur des résines photosensibles déposées sur un substrat en plastique [3]. Avec ces techniques, le nombre de puits varie de 100 à 9600 puits, avec des diamètres de 60 à 500 µm et des profondeurs de 5 à 300 µm.

Cependant, les bords de ces cuvettes ne laissent pas de séparation physique entre la phase liquide au sein de la cuvette et celle à l'extérieur de celle-ci, autorisant donc des connexions entre les cuvettes, et donc des contaminations entre elles. En outre, ces dispositifs nécessitent pour leur utilisation des systèmes de dispense de gouttes, un dispositif de déplacement et d'alignement précis de ce système, ainsi qu'un dispositif pour l'alimentation en liquide. On retrouve donc les mêmes inconvénients et problèmes que ceux précités.

Pour la détection électrique ou électrochimique dans les tests biologiques, un grand nombre de systèmes de détection électrique ou électrochimique décrits dans la littérature ne permet pas de descendre sous le nanomolaire en termes de limite de détection, limitation souvent due au faible nombre d'électrons générés par chaque hybride.

Les techniques faisant intervenir une accumulation enzymatique permettent d'abaisser cette limite de détection aux environs du picomolaire du fait de l'amplification élevée du nombre d'espèces rédox à détecter présentes dans le milieu réactionnel **[4].** Cependant, cette méthode d'amplification engendre un problème pour les systèmes multiplots connus actuellement car le composé rédox diffuse et peut ainsi contaminer les plots voisins.

Dans ce but, la plupart du temps, l'utilisation de structures tridimensionnelles (utilisation de compartiments) est recommandée dans la littérature. Par exemple, Infineon **[6]** propose des murs en polymères et un système de migration des molécules par des forces électriques, de manière à les confiner dans un volume défini et à éviter ainsi la contamination inter-plots. Malheureusement, des problèmes de remplissage fluidique peuvent être rencontrés avec ce genre d'approche lorsqu'on souhaite par exemple travailler en veine liquide très fine. Là aussi, un dispenseur de goutte devient indispensable.

Il existe donc un réel besoin d'un procédé permettant d'obtenir aisément une matrice de gouttes haute densité à partir d'un liquide d'intérêt, utilisable sans aucun appareillage de dispense de gouttes, facile à utiliser, permettant d'éviter efficacement des contaminations entre les gouttes, et qui peut être utilisé de manière très souple avec tous les procédés actuellement connus de l'homme du métier pour analyser collectivement ou individuellement des micro-volumes, par exemple sur un laboratoire sur puce, qu'il s'agisse d'un procédé chimique, électrique ou optique ou d'une combinaison de ces procédés.

### Exposé de l'invention

La présente invention répond précisément à ce besoin, et à d'autres encore, expliqués ci-dessous, en fournissant un procédé de répartition localisée de gouttes d'un liquide d'intérêt sur une surface active d'un substrat, ledit procédé comprenant les étapes suivantes :
- une introduction du liquide d'intérêt dans une boîte via des moyens d'introduction, ladite boîte enfermant ladite surface active, et
- une extraction du liquide d'intérêt de ladite boîte via des moyens d'extraction,
ladite surface active ainsi que les autres surfaces à l'intérieur de la boîte étant sensiblement non mouillantes vis-à-vis du liquide d'intérêt à l'exception de plusieurs zones de capture localisées, formées de manière déterminée sur ladite surface active, qui sont chacune appropriées pour capturer une goutte du liquide d'intérêt,
lesdits moyens d'introduction et d'extraction du liquide d'intérêt dans la boîte étant disposés de telle manière que lorsque le liquide d'intérêt est introduit dans la boîte, il couvre lesdites zones de capture, et lorsque le liquide d'intérêt est extrait de la boîte, une goutte dudit liquide d'intérêt reste captive de manière répartie et localisée sur chaque zone de capture.

Dans le contexte de la présente invention, un liquide est dit « d'intérêt » dès lors que ce liquide est destiné à être capturé par des zones de capture dans un procédé conforme à la présente invention, pour former une matrice de gouttes de ce liquide.

Par « liquide d'intérêt », on entend tout liquide susceptible de nécessiter une disposition en matrice de gouttes sur un support, par exemple dans un but analytique et/ou chimique et/ou biochimique. Par « but chimique et/ou biochimique », on entend toute réaction chimique et/ou biochimique qui peut être réalisée dans un liquide. Par « but analytique », on entend toute analyse qualitative et/ou quantitative qui peut être réalisée dans un liquide.

Le liquide d'intérêt peut être organique ou aqueux. Il peut s'agir d'un quelconque des liquides actuellement manipulés en laboratoire ou dans l'industrie, par exemple sur des laboratoires sur puce. Il peut s'agir par exemple d'un liquide choisi parmi une solution, un solvant, un réactif, un échantillon, un extrait cellulaire, un prélèvement provenant d'un organisme animal ou végétal, un prélèvement effectué dans la nature ou dans l'industrie, etc. Il peut s'agir d'un liquide biologique ou chimique, par exemple d'une solution dans laquelle une reconnaissance biologique (par exemple protéine/protéine ; hybridation d'acides nucléiques; antigène/anticorps, etc.) doit être réalisée et/ou détectée. Ce liquide d'intérêt peut être un liquide dilué, si nécessaire, pour son utilisation avec le dispositif de la présente invention, comme cela peut se faire sur les laboratoires sur puce. Un produit solide peut être mis en solution pour constituer un liquide d'intérêt au sens de la présente invention. Ce produit solide peut être choisi par exemple parmi un produit chimique ou biochimique, un réactif, un matériau à analyser, un prélèvement provenant d'un organisme animal ou végétal, un prélèvement effectué dans la nature ou dans l'industrie, etc. L'homme du métier connaît la manipulation de tels produits et liquides d'intérêt.

De manière générale, le procédé de l'invention peut être utilisé dans un laboratoire sur puce, dans un microsystème pour la chimie ou la biologie, tel qu'un microsystème d'analyse, ou dans une puce biologique (biopuce), par exemple choisie dans le groupe constitué des puces à ADN (acide désoxyribonucléique), à ARN (acide ribonucléique), des puces à protéines, des puces à anticorps, des puces à antigènes, des puces à cellules, etc.

Le procédé de l'invention utilise une boîte. Cette boîte peut être ouverte ou fermée. Elle peut être utilisée uniquement pour obtenir une répartition localisée de gouttes du liquide d'intérêt sur la surface active suivant le procédé de l'invention. Elle peut aussi être utilisée pour confiner les gouttes réparties localement sur la surface active et/ou effectuer des réactions chimiques ou biochimiques et/ou des analyses qualitatives et/ou quantitatives sur ou dans ces gouttes. La boîte peut donc constituer un véritable laboratoire miniature (laboratoire sur puce).

Les dimensions de cette boîte dépendent notamment des dimensions du substrat comportant la surface active choisie pour la mise en oeuvre du procédé de l'invention, mais aussi, le cas échéant, de la présence de dispositifs d'analyse ou microsystèmes additionnels qui peuvent être joints dans ladite boîte, par exemple d'autres laboratoires sur puce, pour la mise en oeuvre du procédé de l'invention. Ces dimensions peuvent descendre en dessous du cm pour le côté le plus grand de la boîte.

La boîte peut être constituée par exemple d'un matériau choisi dans le groupe constitué par un polymère organique, une matière plastique élastomère, un verre, du métal, du silicium, une résine photosensible, ou par tout matériau connu de l'homme du métier et permettant la mise en oeuvre de la présente invention. Par exemple, il peut s'agir d'un polymère choisi groupe comprenant les polycarbonates, les polydiméthylsiloxanes, les polyméthylmétacrylates, les polychlorobiphényles et les copolymères de cyclooléfines.

Le matériau de la boîte est généralement choisi en fonction du type du liquide d'intérêt à répartir en gouttes, de l'utilisation de la boîte (simplement immersion ou immersion et analyses) et en fonction des spécifications de coût du fabriquant.

Les boîtes utilisables sont de préférence suffisamment étanches pour éviter par exemple les fuites lors de l'immersion dans celles-ci de la surface active, les contaminations pouvant provenir de l'extérieur de la boîte, par exemple bactérienne, chimiques, etc., et l'évaporation de la, ou des, goutte(s) capturée(s) par la, ou les, zone(s) de capture après l'extraction du liquide d'intérêt de la boîte.

Les boîtes utilisables peuvent comprendre un capot pour leur montage, mais aussi, dans certaines applications, pour leur ouverture ou leur fermeture, notamment afin de pouvoir retirer de celles-ci le substrat avec sa surface active après l'avoir mis en contact avec le liquide d'intérêt et/ou ou après les analyses ou réactions dans les gouttes. La boîte peut alors comprendre des moyens de fixation amovibles du substrat. Si la boîte comprend un capot, il sera de préférence suffisamment étanche pour ne pas perturber l'immersion de la surface active.

Le capot peut être constitué d'un matériau tel que ceux précités pour la boîte. Il peut être fabriqué par exemple par moulage, par emboutissage, par gravure ou par érosion mécanique, etc. Il peut ensuite être fixé définitivement sur la boîte pour la fermer, par exemple par collage, compression, plaquage ou par tout autre moyen connu de l'homme du métier et assurant la tenue et l'étanchéité requise pour l'utilisation de celle-ci. Il peut aussi être fixé sur la boîte de manière amovible, toujours en assurant la tenue et l'étanchéité requise pour l'utilisation de celui-ci, afin que la même boîte ainsi constituée puisse servir à l'immersion successive différents substrats avec différentes surfaces actives, pour former plusieurs matrices de gouttes.

De préférence, le matériau de la boîte, et, le cas échéant, de son capot, est, à l'intérieur de celle-ci, sensiblement non mouillant vis-à-vis du liquide d'intérêt. En effet, ceci permet d'éviter que des gouttes adhèrent aux surfaces internes de la boîte, après l'extraction du liquide d'intérêt, et tombent sur la surface active et viennent gêner les analyses et réactions sur les gouttes réparties localement sur la surface active. Des traitements de surface peuvent être nécessaires pour obtenir ce résultat, par exemple tels que ceux décrits ci-dessous pour la surface active.

Les boîtes fermées utilisables comprennent des moyens d'introduction et d'extraction du liquide d'intérêt de ladite boîte. Il n'y a pas de limitation dans la position, la forme et la fonction de ces moyens autres que celles-ci : ces moyens doivent permettre l'introduction puis l'extraction du liquide d'intérêt de la boîte ; et ils doivent être disposées de telle manière que lorsque le liquide d'intérêt est introduit dans la boîte, il couvre la ou les zone (s) de capture, et lorsque le liquide d'intérêt est extrait de la boîte, une goutte du liquide d'intérêt reste captive par zone de capture. Ces moyens peuvent comprendre des ouvertures formées sur la boîte. Ces ouvertures peuvent être disposées sur le dessus ou les côtés du capot ou de la boîte, ou encore à travers le substrat. Le liquide d'intérêt peut entrer puis sortir de la boîte par deux ouvertures différentes, une ouverture pour l'introduction du liquide d'intérêt dans la boîte, et une ouverture pour l'extraction du liquide d'intérêt de la boîte. Le liquide d'intérêt peut aussi entrer puis sortir de la boîte par une seule des deux ouvertures, une deuxième ouverture servant à autoriser l'extraction du liquide d'intérêt, soit en laissant passer l'air appelé par l'extraction, soit en injectant par cette deuxième ouverture un fluide gazeux permettant de pousser le liquide d'intérêt hors de la boîte. Ces ouvertures peuvent être disposées sur le capot ou sur les parois de la boîte, par exemple par gravure, emboutissage, moulage, exposition à la lumière pour une résine photosensible, perçage mécanique, etc.

Les moyens pour introduire le liquide d'intérêt dans la boîte peuvent comprendre en outre tout moyen approprié connu de l'homme du métier pour injecter un liquide dans une boîte, notamment ceux utilisés dans le domaine des laboratoires sur puce et des microsystèmes. Il peut s'agir par exemple d'une seringue, d'une pipette, d'une micropipette, d'une pompe d'injection, etc.

Les moyens d'extraction du liquide d'intérêt de la boîte peuvent être tout moyen approprié connu de l'homme du métier pour extraire un liquide d'une boîte. L'essentiel est que la ou les goutte(s) capturée(s) par la zone de capture ne soient pas entraînées lors de l'extraction du liquide d'intérêt. Par exemple, les moyens d'extraction peuvent comprendre une pompe d'aspiration du liquide d'intérêt hors de la boîte : l'étape d'extraction consiste alors à aspirer le liquide d'intérêt de ladite boîte. Par exemple aussi, les moyens d'extraction peuvent comprendre une pompe d'injection d'un fluide gazeux dans la boîte : l'étape d'extraction consiste alors à injecter un fluide gazeux dans la boîte de manière à expulser le liquide d'intérêt de ladite boîte. Avantageusement, le fluide gazeux injecté peut être saturé en vapeur du liquide d'intérêt par toute technique connue de l'homme du métier. En outre, de manière générale, les ouvertures ou connexions de la boîte vers l'extérieur peuvent avantageusement être reliées à des réserves de gaz saturé en vapeur de la phase liquide d'intérêt, ce qui a pour avantage d'éviter l'évaporation des gouttes une fois formées, en particulier lorsque les dimensions de la boîte et du substrat utilisés sont très faibles. Le gaz ou fluide gazeux peut être de l'air, ou un gaz neutre si nécessaire.

Le substrat peut être constitué de tout matériau approprié pour mettre en oeuvre la présente invention. Il peut s'agir par exemple d'un des matériaux de base utilisés pour fabriquer les laboratoires sur puce, des puces biologiques, microsystèmes, etc. Il peut s'agir par exemple d'un matériau choisi dans le groupe constitué de silicium, d'oxyde de silicium, de nitrure de silicium, de verre, d'un polymère organique, et d'un métal ou d'un alliage de métal. Les polymères organiques peuvent être par exemple choisis dans le groupe comprenant les polycarbonates, les polydiméthylsiloxanes, les polyméthylmétacrylates, les polychlorobiphényles et les copolymères de cyclooléfines. Le métal peut être choisi par exemple dans le groupe constitué par Au, Ti, Pt, Al, Ni, et l'alliage de métal peut être de l'acier inox.

Le substrat peut constituer une des parois de la boîte. Les parois constituant la boîte peuvent alors être montées à partir du substrat, par exemple par collage ou compression, pourvu que la surface active soit dans la boîte.

La surface active peut être constituée de tout matériau sensiblement non mouillant vis-à-vis de le liquide d'intérêt et approprié pour mettre en oeuvre la présente invention. En effet, le fonctionnement du procédé de la présente invention repose en partie sur le fait que la surface active ne retient pas ou très peu le liquide d'intérêt, ce qui permet un dé-mouillage total, facile, sans rétention de liquide d'intérêt sur la surface, et ceci sans séchage. Ainsi, les gouttes de liquide d'intérêt sont capturées sélectivement et exclusivement par la, ou les, zone(s) de capture, et sont circonscrites à ces zones, ce qui évite tout problème de contamination entre les gouttes capturées.

Le matériau de la surface active est donc notamment choisi en fonction du liquide d'intérêt à partir duquel une matrice de gouttes doit être formée, mais aussi en fonction du substrat, des zones de capture, et le cas échéant, en fonction de zones de travail arrangées avec ces zones de capture (les zones de travail sont définies ci-dessous). Il peut être disposé sur le substrat par modification chimique ou par dépôt. Il peut s'agir également du substrat lui-même s'il est constitué d'un matériau sensiblement non mouillant vis-à-vis du liquide d'intérêt.

Par exemple, lorsque le liquide d'intérêt est aqueux, le matériau formant la surface active est avantageusement hydrophobe. Par exemple, dans les exemples de matériaux précités constituant le substrat, la surface du substrat peut être rendue non mouillante, ici hydrophobe, par modification chimique, par exemple par silanisation avec un silane porteur de fonctions hydrophobes, par exemple 1H, 1H, 2H, 2H-perfluorodécyl-trichlorosilane. Il peut s'agir par exemple aussi d'un dépôt de téflon liquide sur plateau tournant ; d'une silanisation en phase gazeuse de silane hydrophobe ; de l'utilisation de silane hydrocarboné, par exemple du type octadécyltrichlorosilane. Les matériaux et procédés utilisables pour la mise en oeuvre de telles modifications chimiques sont connus de l'homme du métier. Un exemple de réalisation est donné ci-dessous.

Le traitement permettant de rendre la surface du substrat non mouillante vis-à-vis du liquide d'intérêt peut être réalisé, avant ou après la formation de la, ou des, zone(s) de capture et/ou de la, ou des, zone(s) de travail correspondantes. Ces dernières seront éventuellement protégées au cas où il est réalisé après celles-ci.

La forme et la taille de cette surface active, et donc aussi du substrat sur lequel elle est formée, n'ont pas d'importance pour le fonctionnement du procédé de l'invention. Elles sont généralement déterminées en fonction du nombre de zones de gouttes de liquide d'intérêt à former sur cette surface et des spécifications de coût. Toutefois, afin d'éviter des rétentions non prévues de liquide d'intérêt sur la surface, de préférence, elle est choisie plane. Par exemple, la surface active peut avoir une forme et une taille comparables aux plaquettes utilisées pour la fabrication de laboratoires sur puce et des microsystèmes d'analyse et de détection connus de l'homme du métier.

La surface du substrat utilisée dans le procédé de l'invention (surface active) est modifiée (structuration) afin de créer des zones localisées mouillantes vis-à-vis du liquide d'intérêt, c'est à dire de forte affinité pour le liquide d'intérêt, ou au niveau desquelles le liquide peut être retenu par des forces capillaires. Ces zones sont appelées « zones de capture ». Le terme « localisé » est défini ci-dessus. En faisant ruisseler un peu de liquide d'intérêt sur la surface active, les zones de capture capturent, ou retiennent, une goutte de liquide d'intérêt, alors que la surface active, sensiblement non mouillante vis-à-vis du liquide d'intérêt, ne retient pas ou très peu de liquide d'intérêt. En cessant le ruissellement, seules les gouttes de liquide d'intérêt retenues localement par les zones de capture restent sur la surface active.

Une multitude de solutions peuvent être envisagées pour former ces zones de capture sur la surface active du substrat : traitement chimique de surface pour augmenter localement l'affinité avec le liquide, par exemple par greffage de molécules avec groupements spécifiques, électro-mouillage localisé grâce à des micro-électrodes, micro-cuvettes formées par des couronnes en relief sur la surface, micro-cuvettes gravées en profondeur, etc. En effet, la, au moins une, zone de capture peut être une zone de capture chimique, électrique ou physique d'une goutte de liquide d'intérêt. Il peut s'agir de tout type de zone, localisée, qui permet de capturer une goutte de liquide d'intérêt par simple contact de cette zone avec le liquide d'intérêt.

A titre d'exemple, il peut s'agir d'une zone de capture par mouillage. En effet, la zone de capture peut être constituée d'un matériau support qui est disposé de manière déterminée sur ladite surface active ou sur le substrat et qui, si nécessaire, peut être modifié chimiquement pour le rendre mouillant vis-à-vis du liquide d'intérêt, par exemple par greffage sur celui-ci d'une fonction chimique mouillante vis-à-vis dudit liquide d'intérêt.

Par exemple, ce matériau support peut être constitué d'un matériau choisi dans le groupe constitué du silicium, de l'oxyde de silicium (SiO₂); du verre ; du nitrure de silicium (Si₃N₄) ; des polymères, par exemple des polymères organiques tels que ceux choisis dans le groupe comprenant les polycarbonates, les polydiméthylsiloxanes, les polyméthylmétacrylates, les polychlorobiphényles et les copolymères de cyclooléfines ; et d'un métal ou d'un métal ou d'un alliage métallique, par exemple choisi parmi Al, Au, ou l'acier inox.

Par exemple, la fonction chimique mouillante vis-à-vis d'un liquide d'intérêt aqueux peut être choisie dans le groupe constitué d'une fonction alcool, alcoolate, acide carboxylique, carboxylate, acide sulfonique, sulfonate, oxyamine, hydrazine, amine et ammonium.

Par exemple, le procédé décrit dans le document **[9]** ou **[10]** peut être utilisé pour fabriquer ce type de zone de capture.

A titre d'exemple aussi, en particulier lorsque le procédé de l'invention est destiné à répartir des gouttes du liquide d'intérêt aqueux, et lorsque la surface active ou le substrat est à base de silicium, la zone de capture peut être constituée de silicium noir hydrophile, qui peut être formé très facilement sur une telle surface par gravure. La zone gravée devient particulièrement mouillante vis-à-vis d'un liquide d'intérêt aqueux. La zone gravée ne nécessite pas d'autre modification chimique pour être mouillante vis-à-vis des solutions aqueuses. Cet exemple de réalisation est donc très économique. Par exemple le document **[11]** expose un protocole de laboratoire pouvant être utilisé pour fabriquer ce type de zones de capture.

A titre d'exemple aussi, la zone de capture peut être une électrode de capture par mouillage. Suivant cet exemple, la zone de capture, ici une électrode, peut être constituée par exemple d'un matériau choisi dans le groupe constitué des métaux nobles, par exemple Au, Pt, Pd, Ti, Ni, Al, etc., ou un alliage de métaux nobles ; de carbone ; de graphite ; et d'oxyde d'indium et d'étain (ITO) ; ledit matériau étant rendu mouillant par électrodéposition sur celui-ci d'un polymère conducteur d'électricité sur lequel est fixée une fonction chimique mouillante vis-à-vis du liquide d'intérêt. Le polymère conducteur d'électricité peut être un des polymères utilisés dans la fabrication des laboratoires sur puce. Il peut être choisi par exemple dans le groupe constitué du polypyrrole, de la polyaniline, du polyazulène, d'un polythiophène, du polyindole, du polyfurane, du polyfluorène La fonction chimique mouillante peut être par exemple une des fonctions chimiques mouillantes citées ci-dessus. Sa fixation sur le monomère avant polymérisation ou sur le polymère une fois qu'il est formé peut être effectuée par les techniques classiques de chimie. Un exemple de procédé de fabrication de ce type de zone de capture utilisable pour mettre en oeuvre le procédé de la présente invention peut être trouvé dans le document **[4].**

A titre d'exemple aussi, la zone de capture peut être une zone de capture d'une goutte du liquide d'intérêt par des forces capillaires. Il peut s'agir par exemple d'une gravure de, ou une saillie sur, la surface active permettant de capturer la goutte par des forces capillaires. Ces gravures ou saillies peuvent être réalisées par exemple par gravure directe du substrat ; par dépôt d'un matériau à la surface d'un substrat plan, par exemple par couchage, évaporation, pulvérisation, ou dépôt électrochimique, puis gravure en conjonction avec un procédé classique de photolitoghraphie, par exemple par couchage de résine, insolation et définition de motifs, ou gravure ; par définition directe de motifs par photolithographie dans des polymères photosensibles, par exemple dans le cas de résines photosensibles ; moulage ou emboutissage de matériaux plastiques. Ces procédés sont connus de l'homme du métier. L'essentiel est que ces gravures ou saillies qui forment ces zones de capture permettent de capturer, de manière localisée, par capillarité, une goutte du liquide d'intérêt.

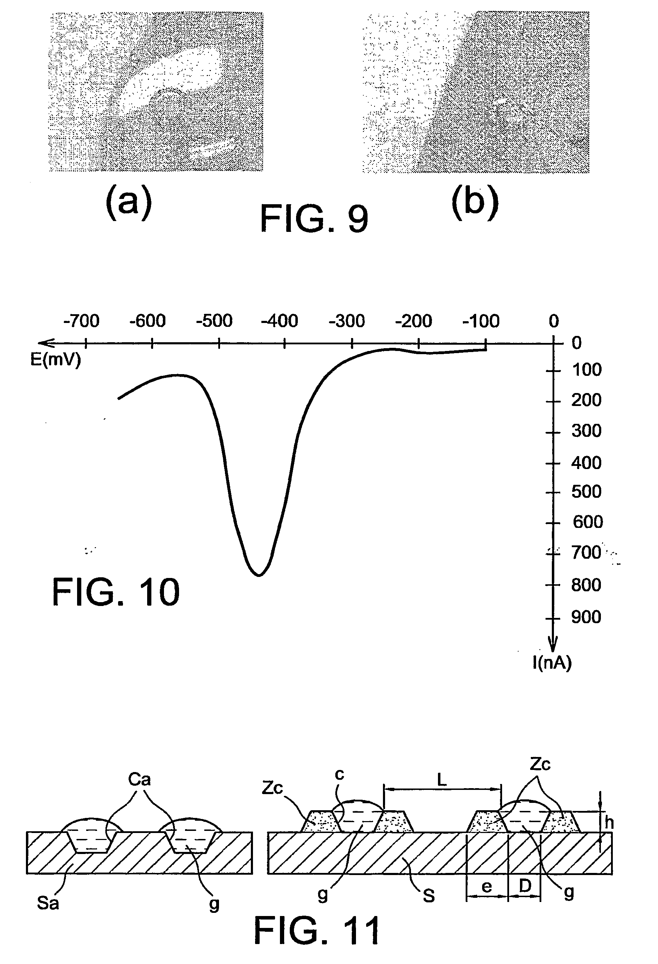

A titre d'exemple encore, les zones de capture peuvent être en cuvette sur le substrat, ou en saillies, construites de manière à former des bordures sur ladite surface active. De préférence les bordures ne se touchent pas entre elles, elles n'ont pas de bord commun, et elles forment chacune une cuvette sur la surface du substrat destinée capturer une goutte du liquide d'intérêt. La figure 11 annexée est une représentation schématique en coupe de deux types de cuvettes utilisables dans le procédé de l'invention : à gauche des cuvettes (cₛ) « enfoncées » dans un substrat (Sₐ), et à droite des cuvettes (c) formées grâce à leur bordure (b) sur un substrat (S). A droite, un espace libre reste disponible entre les cuvettes (c) pour l'écoulement du liquide d'intérêt. La fabrication des bordures ou cuvettes peut être réalisée par exemple par gravure directe du substrat ; dépôt d'un matériau à la surface d'un substrat plan, par exemple par couchage, évaporation, pulvérisation, ou dépôt électrochimique, puis gravure en conjonction avec un procédé classique de photolitoghraphie, par exemple par couchage de résine, insolation et définition de motifs, ou gravure ; définition directe de motifs par photolithographie dans des polymères photosensibles, par exemple dans le cas de résines photosensibles ; moulage ou emboutissage, par exemple de matériaux plastiques ou du substrat formant la surface active. Ces procédés sont connus de l'homme du métier. Elles peuvent en particulier être formées durant la dernière étape d'un empilement technologique de plusieurs couches sur le substrat. Les couches inférieures pourront contenir des actionneurs ou des détecteurs mécaniques, optiques ou électroniques, par exemple de type MEMS ou MEMS optique ("Micro Electro Mechanical System") ou encore des molécules greffées d'intérêt chimique ou biologique destinés à former une zone de travail.

Lorsque le liquide d'intérêt est aqueux, la zone de capture est de toute préférence une zone hydrophile et la surface active sensiblement non mouillante est de toute préférence hydrophobe. Ainsi, la zone de capture peut capturer la goutte du liquide d'intérêt par des interactions de type hydrophile/hydrophobe avec le liquide d'intérêt. De manière générale, la zone de capture capture localement la goutte de liquide d'intérêt du fait d'une mouillabilité (chimique ou capillarité) de la zone de capture pour le liquide d'intérêt plus importante que celle de la surface active.

Selon l'invention, les zones de capture localisées, réparties de manière déterminée sur ladite surface active, peuvent former une matrice. Par matrice de gouttes, on entend un arrangement déterminé desdites gouttes, sans qu'une forme géométrique particulière dudit arrangement soit exigée. La matrice de gouttes peut être ronde, carrée, polygonale et même aléatoire, l'essentiel étant que les gouttes formées soient disposées de manière localisée et déterminée sur la surface conformément à l'objectif atteint par la présente invention. Par localisée, on entend circonscrite, individualisée et distincte des autres gouttes capturées volontairement sur la surface active grâce au procédé de l'invention.

Selon l'invention, la zone de capture peut avoir n'importe quelle forme, pourvu qu'elle capture une goutte du liquide d'intérêt. Cette zone peut être choisie, à titre d'exemple, parmi une forme annulaire, en étoile, en rectangle, en carré, en triangle, en ellipse, ou en polygone ayant de 4 à 20 côtés, ou toute autre forme convenant à la mise en oeuvre de la présente invention. En général, elle est sous forme de bande.

En outre, chaque zone de capture peut être arrangée avec au moins une zone de travail (définie ci-dessous) formée sur ladite surface active de telle manière que cette zone de travail soit en contact avec la goutte du liquide d'intérêt lorsqu'elle est capturée par ladite zone de capture. De préférence, au moins une zone de capture a une forme annulaire, ouverte ou fermée, qui entoure la, au moins une, zone de travail arrangée avec elle. Par ailleurs, une zone de capture d'une goutte de liquide d'intérêt peut entourer plusieurs zones de travail, par exemple de 2 à 4 ou plus, pourvu que, lorsqu'une goutte du liquide d'intérêt est capturée par la zone de capture, cette goutte recouvre, au moins partiellement, toutes les zones de travail qui sont entourées par cette zone de capture.

Par zone de travail, on entend une zone au niveau de laquelle des opérations physiques et/ou chimiques et/ou optiques peuvent être menées dans la goutte capturée par la zone de capture avec laquelle elle est arrangée. Ainsi, selon l'invention, la, au moins une, zone de travail peut être une zone d'interaction choisie parmi une zone d'interaction électrique, chimique, mécanique, optique avec ladite goutte de liquide d'intérêt capturée, ou une zone au niveau de laquelle plusieurs de ces interactions sont utilisées simultanément ou successivement.

A titre d'exemple, la zone de travail peut être une zone d'interaction chimique avec la goutte de liquide d'intérêt capturée, avec ou sans microcellule électrochimique. La zone de travail peut par exemple comporter des fonctions ou des réactifs chimiques ou biologiques prêts à réagir avec une cible de ces fonctions ou de ces réactifs présente dans un liquide d'intérêt. Cette zone de travail peut être choisie parmi celles connues de l'homme du métier dans le domaine des puces biologiques (puces commercialisées par AGILENT, CIPHERGEN, EUROGENTEC). La différence du dispositif de la présente invention avec ces puces de l'art antérieur réside surtout en la présence de la zone de capture d'une goutte de liquide d'intérêt arrangée avec ladite zone de travail. Cette zone de travail peut être fabriquée par exemple par silanisation puis immobilisation de la sonde biologique comme cela est décrit par exemple dans le document **[12].**

Cette zone de travail peut être par exemple une zone fonctionnalisée par une molécule chimique (« sonde ») destinée à interagir avec une cible susceptible d'être présente dans un liquide d'intérêt. La molécule chimique (« sonde ») peut être choisie par exemple dans le groupe constitué par les molécules porteuses de fonction silanol, les complexes organométalliques (par exemple du rhodium lié à des phosphines chirales telles que le BINAP (marque de commerce), la DUPHOS (marque de commerce) intervenant dans des réactions d'hydrogénation, ou bien des complexes du ruthénium intervenant par exemple dans des synthèses de cétones insaturées) et les catalyseurs à base de métaux (par exemple palladium supporté sur silice, chlorure d'aluminium). La « cible » correspondante à chacune de ces fonctions chimiques (« sondes ») peut être par exemple choisie dans le groupe constitué des silanes (par exemple tri-, di-, mono-éthoxysilane ou tri-, di-, mono-chlorosilane), des composés alcéniques (par exemple les déhydroaminoacides), des dérivés alcools allyliques (par exemple le 3-buten-2-ol), des composés aromatiques chlorés (par exemple mono-, di-, tri-chlorophénol), des mélanges de composés aromatiques et de réactifs halogénés (par exemple benzène et brome, ou benzène et chlorure d'acétyle).

La zone de travail peut comporter par exemple un polymère fonctionnalisé par une sonde biologique telles que celles citées ci-dessus, dans le but de fixer une cible correspondante susceptible d'être présente dans un liquide d'intérêt pour la détecter, par exemple optiquement. Par exemple, sur un substrat tels que ceux précités, cette zone de travail peut être obtenue selon les méthodes décrites dans le document [13].

A titre d'exemple également, selon l'invention, la zone de travail peut être une zone d'interaction électrique, par exemple une microcellule électrochimique. Une microcellule électrochimique est un dispositif possédant au moins deux électrodes, préférentiellement coplanaires, formant une électrode de travail et une contre-électrode. Elle peut également posséder une électrode de référence. Ces éléments sont connus de l'homme du métier et les procédés de fabrication connus de l'homme du métier sont utilisables pour fabriquer cette zone de travail, par exemple le procédé décrit dans le document référencé [8]. La zone de travail constitue alors un véritable microréacteur électrochimique qui utilise les gouttes de liquide d'intérêt capturées par les bordures comme milieux réactionnels, et plus précisément comme milieux électrochimiques. Chaque réacteur électrochimique (bordure + zone de travail sous forme de microcellule électrochimique + goutte de liquide d'intérêt capturée) suivant cette première forme de réalisation de la présente invention peut être utilisé pour réaliser toute réaction et/ou analyse électrochimique connue de l'homme du métier.

Le procédé de l'invention utilisant ces réacteurs électrochimiques peut servir par exemple à effectuer des réactions d'électropolymérisation localisée d'un ou de plusieurs monomère(s) présent(s) dans la goutte (polymérisation ou copolymérisation) et/ou d'électro-greffage localisé d'une ou de plusieurs molécule (s) chimique (s) présente (s) dans la goutte du liquide d'intérêt sur une des électrodes de la microcellule. Dans cet exemple, le liquide d'intérêt peut être un liquide contenant les réactifs nécessaires à l'électropolymérisation ou à l'électrogreffage désiré. La polymérisation et le greffage sont alors avantageusement localisés au niveau de chaque goutte du liquide d'intérêt capturée par chaque zone de capture. De telles réactions d'électropolymérisation ou greffage localisés peuvent être utilisées par exemple pour la fabrication de puces biologiques ou systèmes d'analyse.

Dans un exemple particulier de mise en oeuvre du procédé de l'invention, la microcellule électrochimique peut être utilisée d'abord pour « fabriquer » les zones de travail, et ensuite, par exemple, pour utiliser ces zones de travail pour l'analyse des gouttes d'un liquide d'intérêt à analyser. Par exemple, si les zones de travail doivent comprendre un polymère organique fonctionnalisé par une sonde, par exemple une sonde biologique, elles peuvent être fabriquées par électropolymérisation d'un polymère conducteur fonctionnalisé par une sonde, par exemple suivant le procédé décrit dans le document référencé [5]. La particularité liée à l'utilisation du procédé de l'invention est qu'on utilise les zones de capture pour capturer de manière localisée sur chaque zone de travail une première goutte d'un premier liquide d'intérêt contenant les réactifs nécessaires à l'électropolymérisation (monomère organique). La fonctionnalisation par la sonde, peut être réalisée simultanément à l'électropolymérisation, le premier liquide d'intérêt contient alors aussi la sonde (par exemple monomère fonctionnalisé par la sonde). La fonctionnalisation peut aussi être réalisée postérieurement à l'électropolymérisation au moyen d'une deuxième goutte d'un deuxième liquide d'intérêt (contenant la sonde) capturée par les mêmes zones de capture et, de ce fait localisée sur les mêmes zones de travail. En outre, les zones de travail ainsi fabriquées peuvent ensuite être séchées, et elles peuvent servir, toujours grâce à leur zone de capture qui les entoure, à capturer une goutte d'un troisième liquide d'intérêt à analyser, contenant une cible qui interagit avec la sonde (par exemple oligonucléotides complémentaires). Un quatrième liquide d'intérêt peut encore être utilisé pour analyser (détection et/ou dosage) l'interaction sonde/cible sur lesdites zones de travail, et ainsi de suite.

Le microréacteur électrochimique qui peut être utilisé dans le procédé de l'invention peut servir par exemple aussi à effectuer des analyses électrochimiques, qualitatives et/ou quantitatives, d'analytes présents dans les gouttes capturée par les zones de capture. Il peut servir par exemple aussi à effectuer des analyses électrochimiques, qualitatives et/ou quantitatives, d'une interaction moléculaire sonde/cible, la sonde étant fixée sur les zones de travail, et la cible se trouvant dans les gouttes du liquide d'intérêt capturées.

Dans un exemple particulier, où la microcellule électrochimique est utilisée pour détecter une cible présente dans un échantillon liquide, par exemple en mettant en jeu une interaction de la cible à détecter avec une sonde spécifique fixée sur les zones de travail, il est possible de détecter électrochimiquement ladite interaction par exemple avec amplification du signal par accumulation enzymatique dans une goutte d'un liquide d'intérêt, contenant un substrat enzymatique, capturée par la zone de capture qui entoure chaque zone de travail. Le document **[4]** expose un protocole opératoire utilisable pour ce type de détection, avec le procédé de la présente invention.

La détection d'une interaction sonde/cible sur une zone de travail peut faire intervenir un des autres moyens connus de l'homme du métier que la cellule électrochimique, par exemple un de ceux exposés dans la présente description, par exemple un procédé optique. La microcellule électrochimique peut donc servir dans ce cas uniquement à « fabriquer » les zones de travail, la détection d'une interaction sonde/cible étant ensuite effectuée par un autre moyen, ou alors à analyser une interaction sonde/cible, la fabrication des zones de travail étant réalisée par un autre procédé, par exemple un de ceux connus de l'homme du métier dans le domaine des puces biologiques.

De manière générale, selon l'invention, lorsqu'une sonde est utilisée sur les zones de travail, elle peut être choisie par exemple dans le groupe constitué par une enzyme, un substrat d'enzyme, un oligonucléotide, un oligonucléoside, une protéine, un récepteur membranaire d'une cellule eucaryote ou procaryote, un anticorps, un antigène, une hormone, un métabolite d'un organisme vivant, une toxine d'un organisme vivant, polynucléotide, polynucléoside, ADN complémentaire, ou un mélange de celles-ci. Elle est bien entendu choisie en fonction de la cible avec laquelle elle devra interagir.

A titre d'exemple également, la zone de travail peut posséder des dispositifs actifs ou de mesure, tels que des capteurs ou des actionneurs. Ces dispositifs peuvent s'ajouter aux zones de travail précitées, ou être exclusifs suivant l'objectif visé dans la mise en oeuvre de la présente invention. Les dispositifs actifs ou de mesure sont avantageusement situés au centre des zones de capture. Lorsque la zone de travail comprend un capteur, il peut être choisi par exemple dans le groupe constitué des capteurs électriques, magnétiques, électrostatiques, mécaniques (par exemple capteur de pression), thermiques (par exemple capteurs de température), optiques (par exemple dispositif de détection optique) et chimiques. Lorsque la zone de travail comprend un actionneur, il peut être choisi par exemple dans le groupe constitué des actionneurs optiques (source lumineuse), électriques, magnétiques, électrostatiques, mécaniques (déplacement mécanique), thermique (résistance chauffante) et chimiques. De tels capteurs et actionneurs, utilisables pour la mise en oeuvre de la présente invention, ainsi que leur procédé de fabrication sont connus de l'homme du métier, notamment dans le domaine des laboratoires sur puce.

Pour la mise en oeuvre du procédé de l'invention, la, au moins une, zone de travail peut être une zone sensiblement non mouillante ou mouillante vis-à-vis du liquide d'intérêt. Les inventeurs ont en effet noté au cours de leurs expérimentations que la mouillabilité de la zone de travail n'est pas déterminante pour le fonctionnement du procédé de la présente invention. Ils ont en effet remarqué, de manière tout à fait inattendue, que le procédé de la présente invention peut aussi fonctionner lorsque la zone de travail est non mouillante vis-à-vis du liquide d'intérêt, pourvu que la goutte capturée recouvre au moins partiellement ladite zone de travail.

Les dimensions d'une zone de capture peuvent varier largement en fonction de l'utilisation à laquelle elle est destinée et de sa nature (type de zone de capture, une ou plusieurs zones de travail par zone de capture, un ou plusieurs zone(s) de travail sur la surface active, etc.). Par exemple pour un laboratoire sur puce ou un microsystème, la zone de capture peut avoir un diamètre allant de 5 µm à 5 mm. Lorsque la zone de capture est sous forme de bande, cette bande peut avoir une largeur de 1 à 500 µm et une épaisseur par rapport à la surface active de 0 à 500 µm. La zone de travail, dont la dimension dépend notamment de la zone de capture (la goutte capturée devant recouvrir au moins partiellement cette zone de travail) peut avoir par exemple, avec les dimensions précitées de la zone de capture, un diamètre tel qu'il touche la zone de capture qui l'entoure ou non. Par exemple, la zone de travail peut avoir un diamètre de 5 µm à 5 mm.

Selon l'invention, la surface active peut aussi être définie de la manière suivante lorsque la zone de capture est sous la forme d'une bordure (voir figure 11 à titre indicatif pour les références) :

| | |
|---|---|
| D : | diamètre intérieur des gouttes, avec, par exemple, 15µm ≤ D ≤ 5mm ; |
| L : | espacement entre gouttes ; |
| e : | section du muret la plus large, avec, par exemple, 20µm ≤ e ≤ 100µm; et |
| h : | hauteur du muret, avec, par exemple, 5µm ≤ h ≤ 20µm; |
| avec | h/D < 0,15 ; e/D < 0,33 ; et h/L < 0,3. |

Ainsi, à titre d'exemple, les bordures se présentent avantageusement sous la forme d'anneau, éventuellement avec une des formes géométriques précitées, dont la hauteur (h) à partir de la surface active est de 5 à 20 µm; dont la section (e) de l'anneau au niveau de la surface active est de 20 à 100 µm; et dont le diamètre (D) à l'intérieur de la bordure, délimitant la zone de travail, est de 15 µm à 5 mm.

Dans le domaines des laboratoires sur puces et des microtechnologies, où la dimension caractéristique des zones de capture est proche de 100 µm, l'orientation de la boîte n'a pas d'importance car les forces de gravité deviennent négligeables devant les forces de capture de la goutte par les zones de capture issues d'interactions à courte distance. En revanche, pour des applications visant des échelles de taille plus élevées pour la mise en oeuvre de la présente invention, la boîte utilisée est bien entendu préférentiellement placée horizontalement avec une structuration de la surface active pour former les zones de capture et de travail vers le haut.

Le procédé de la présente invention peut être schématisé en deux étapes de la manière suivante :
- remplissage total ou partiel de la boîte, ou chambre fluidique, par le liquide d'intérêt de manière à couvrir la ou les zone(s) de capture, puis
- extraction du liquide de la boîte.

Seule(s) la ou les zones de capture retiennent chacune une goutte du liquide d'intérêt, la surface active étant non mouillante.

La mise en oeuvre du procédé de la présente invention dans ses différentes applications peut donc faire intervenir successivement une opération qui se déroule collectivement, puis des opérations individuelles au niveau de chacune des gouttes formées. Ainsi, dans une première opération, dite collective, le procédé de l'invention permet le passage d'une veine fluidique du liquide d'intérêt, par exemple injectée dans ladite boîte, à une matrice de gouttes, ou micro-volumes, indépendantes les unes des autres. Ensuite, des procédés de détection et/ou de réactions chimiques ou biochimiques connues de l'homme du métier peuvent être mis en oeuvre individuellement (opération individuelle), en parallèle ou successivement, dans chacune des gouttes capturées par les zones de capture pour détecter et analyser des cibles présentes dans le liquide d'intérêt.

Ainsi, la présente invention se rapporte également à l'utilisation du procédé de l'invention dans des laboratoires sur puce et microsystèmes pour la chimie ou la biologie, par exemple pour l'analyse et/ou la détection d'analytes cibles présents dans un liquide d'intérêt à analyser. Les laboratoires sur puce et microsystèmes pouvant eux-mêmes être obtenus en mettant en oeuvre le procédé de l'invention, comme cela apparaît à l'homme du métier à la lecture de la présente description.

La présente invention se rapporte également à un procédé de détection d'au moins une molécule susceptible d'être présente dans un liquide d'intérêt, ledit procédé comprenant les étapes suivantes :
- répartition localisée de gouttes de liquide d'intérêt sur une surface active dans une boîte suivant le procédé de la présente invention, et
- détection électrochimique dans lesdites gouttes, de la, au moins une, molécule susceptible d'être présente.

La boîte utilisée dans ce procédé comprend un substrat, une surface active, des zones de captures arrangées avec des zones de travail qui sont des microcellules électrochimiques. Le substrat, la structuration pour former la zone de travail, le traitement de la surface du substrat destiné à la rendre sensiblement non mouillante, et la structuration de la surface destinée à former la zone de capture d'une goutte du liquide d'intérêt sont définis ci-dessus.

La présente invention se rapporte également à un procédé de détection optique d'au moins une molécule susceptible d'être présente dans un liquide d'intérêt, ledit procédé comprenant les étapes suivantes :
- une répartition localisée de gouttes du liquide d'intérêt sur une surface active dans une boîte suivant le procédé la présente invention, et
- détection dans ladite boîte, dans au moins une desdites gouttes, de la, au moins une, molécule susceptible d'être présente au moyen d'un détecteur optique.

La boîte utilisée dans ce procédé comprend un substrat, une surface active, des zones de captures arrangées avec des zones de travail, ces dernières étant des détecteurs optiques. Le substrat, la structuration pour former la zone de travail, le détecteur optique, le traitement de la surface du substrat destiné à la rendre sensiblement non mouillante, et la structuration de la surface destinée à former la zone de capture d'une goutte du liquide d'intérêt sont définis ci-dessus.

La détection optique peut être réalisée après une mise en oeuvre d'une réaction électrochimique dans les gouttes capturées (dans le cas où les zones de travail comprennent, en plus du détecteur optique, une cellule électrochimique), ou chimique ou biochimique dans la goutte capturée (par exemple une réaction enzymatique mettant en évidence une interaction sonde/cible sur la zone de travail recouverte par la goutte du liquide d'intérêt).

Selon l'invention, des détections de différentes molécules susceptibles d'être présentes dans le liquide d'intérêt peuvent être réalisées en parallèle, simultanément ou successivement, dans différentes gouttes de liquide d'intérêt captives sur ladite surface active dans la boîte.

Selon l'invention, le, au moins un, analyte à détecter peut être choisi par exemple parmi les molécules biologique ou chimique. Les molécules biologiques peuvent être choisies par exemple dans le groupe constitué par une enzyme, un substrat d'enzyme, un oligonucléotide, un oligonucléoside, une protéine, un récepteur membranaire d'une cellule eucaryote ou procaryote, un virus, un anticorps, un antigène, une hormone, un métabolite d'un organisme vivant, une toxine d'un organisme vivant, un nucléotide, un nucléoside, un ADN complémentaire. La molécule chimique peut être toute molécule qui doit être analysée qualitativement et/ou quantitativement.

Selon l'invention, des détections de différents analytes susceptibles d'être présents dans le liquide d'intérêt peuvent être réalisées en parallèle, simultanément ou successivement, dans différentes gouttes de liquide d'intérêt captives sur ladite surface active dans la boîte.

La présente invention se rapporte également à un procédé d'électropolymérisation de molécules présentes dans un liquide d'intérêt, ledit procédé comprenant les étapes suivantes :
- répartition localisée de gouttes du liquide d'intérêt sur une surface active dans une boîte suivant le procédé de l'invention, et
- électropolymérisation dans ladite boîte, dans les gouttes dudit liquide d'intérêt, des molécules à polymériser.
   La boîte utilisée dans ce procédé comprend un substrat, une surface active, des zones de captures arrangées avec des zones de travail, ces dernières étant des microcellules électrochimiques. Le substrat, la structuration pour former cette zone de travail, le traitement de la surface du substrat destiné à la rendre sensiblement non mouillante, et la structuration de la surface destinée à former la zone de capture d'une goutte du liquide d'intérêt sont définis ci-dessus. Le polymère peut être par exemple l'un quelconque des polymères utilisés pour la fabrication de puces biologiques, par exemple du polypyrrole, de la polyaniline, du polyazulène, d'un polythiophène, polyindole, polyfurane, polyfluorène.
   L'invention a donc pour objet principal un procédé permettant la formation d'une matrice à haute densité de gouttes d'un liquide d'intérêt sur une surface, dans une chambre fluidique (boîte), de préférence fermée, avec uniquement des connexions de fluide. Il n'est donc nécessaire de faire appel à un système extérieur (appareillage de distribution de gouttes) de dispense de gouttes. Le procédé de l'invention permet de réaliser très facilement et très rapidement une telle matrice de gouttes, et à un coût très réduit (pas d'appareillage de distribution de gouttes). Toutes les applications possibles du procédé de l'invention bénéficient de ces avantages.
   L'application la plus basique du procédé de l'invention est la fabrication de laboratoires sur puce ou microsystèmes d'analyse. En effet, le liquide d'intérêt peut comprendre tous les éléments chimiques nécessaires à la fabrication de laboratoires et microsystèmes, par exemple un monomère pour sa polymérisation localisée à l'endroit de chaque goutte sur la surface active, un tel monomère fonctionnalisé par une sonde, une sonde à fixer sur un polymère de manière localisée à l'endroit de chaque goutte du liquide d'intérêt, des réactifs chimiques et/ou biochimiques à déposer de manière localisée sur une surface, des marqueurs, etc.
   Dans des procédés de chimie ou de biochimie, et/ou dans des procédés d'analyse, à plusieurs étapes utilisant le procédé de l'invention, il n'est pas nécessaire que toutes les étapes conduisent à la formation de gouttes. En effet, rien n'empêche que certaines étapes soient réalisées en couvrant la totalité des zones de capture par un liquide puis en vidant la boîte de ce liquide de telle manière qu'il ne reste pas de gouttes captives par les zones de capture (par exemple par injection dans la boîte d'un gaz sous pression ou par agitation énergique, etc).
   Il est par ailleurs possible de capturer successivement différentes gouttes d'un ou de plusieurs liquides d'intérêt sur une même zone de travail grâce à la zone de capture qui l'entoure. Chaque liquide d'intérêt peut contenir un ou plusieurs réactif(s) nécessaire(s) par exemple pour réaliser une des étapes d'un procédé de chimie ou biochimie, par exemple pour fabriquer les zones de travail et/ou ou pour effectuer des analyses. La succession des différentes gouttes sur une même zone de travail permet par exemple de réaliser différentes étapes successives d'un procédé mis en oeuvre grâce au procédé de l'invention sur les zones de travail entourées par leur zone de capture. L'ensemble de ces étapes de procédé est donc avantageusement localisé sur les zones de travail.
   Cette invention peut s'appliquer dans des domaines très variés. Ainsi, les microsystèmes pour la chimie et la biologie, communément appelés Laboratoire sur Puce (LOC) ou MicroSystème d'Analyse Totale (µTAS) pourront bénéficier de cette invention pour tous les cas où il est nécessaire de travailler avec des densités élevées de sites sur une surface et d'effectuer en deux temps une étape collective, puis une étape individuelle. Par exemple, les puces à ADN ou à protéines sont concernées par cette invention. En outre, cette invention peut s'appliquer partout où il est nécessaire de former des matrices contrôlées de gouttes ou de produits : séchage localisé de produits pharmaceutiques, formation de tâches (« spots ») colorés, greffage localisé de molécules à analyser qualitativement et/ou quantitativement. Par ailleurs, ce nouveau procédé permet de travailler en très faible volume et donc d'envisager des applications où il faut être économe en réactifs : par exemple catalyse homogène, molécules à haute valeur ajoutée de chimie pharmaceutique.
   D'autres caractéristiques et avantages de l'invention se présenteront encore à l'homme du métier à la lecture des exemples qui suivent donnés à titre illustratif et non limitatif en référence aux figures annexées.

### Brève description des figures

- La figure 1 est un schéma représentant en coupe transversale un exemple de mise en oeuvre du procédé de la présente invention pour la création d'une matrice de gouttes.
- La figure 2 est une représentation schématique de différents modes de réalisations possibles du procédé de l'invention en utilisant différentes boîtes fermées, qui diffèrent notamment par la disposition des ouvertures d'entrée et de sortie du liquide d'intérêt.
- La figure 3 est un schéma représentant en coupe transversale un dispositif utilisable pour la mise en oeuvre du procédé de l'invention dans lequel les moyens d'introduction du liquide d'intérêt dans la boîte fermée et d'extraction du liquide d'intérêt de la boîte utilisent une même ouverture de cette boîte.
- La figure 4 est un schéma en vue du dessus, réalisé à partir de photographies expérimentales, d'une surface active (S) sur laquelle une matrice de gouttes est formée en utilisant le procédé de la présente invention : à gauche la surface sans gouttes avant la mise en oeuvre de ce procédé, et à droite, la surface avec la matrice de gouttes (g) retenues par les zones de capture (Zc) lorsque le liquide d'intérêt a été extrait de la boîte, dans la dernière étape du procédé de l'invention.
- Les figures 5, 6 et 7a) à 7c) représentent schématiquement différentes formes de zones de capture utilisables pour la mise en oeuvre du procédé de la présente invention, notamment lorsque ces zones entourent une zone de travail.
- La figure 8 représente schématiquement un dispositif utilisable pour la mise en oeuvre du procédé de l'invention, dans lequel la zone de travail est un microsystème électrochimique.
- Les figures 9a) et 9b) sont deux photographies illustrant la mise en oeuvre du procédé de l'invention sur un dispositif dans lequel la zone de travail est une microcellule électrochimique : la figure 9a) avant capture d'une goutte du liquide d'intérêt, et la figure 9b) après capture d'une goutte du liquide d'intérêt.
- La figure 10 est un graphique montrant la détection, au niveau d'une zone de travail, d'un produit d'une réaction enzymatique au sein d'une goutte capturée par la mise en oeuvre de la présente invention.
- La figure 11 est une représentation schématique en coupe de deux types de cuvettes : à gauche les cuvettes de l'art antérieur, et à droite les cuvettes conformes à la présente invention.

### EXEMPLES

Dans ces exemples, la structuration du substrat pour former les zones de capture de gouttes du liquide d'intérêt est généralement annulaire, de manière à dégager une zone de travail au centre de chaque zone de capture.

### Exemple 1 : exemple de fabrication d'une surface active non mouillante vis-à-vis d'un liquide d'intérêt aqueux

Un substrat de silicium (Si) avec une couche supérieure d'oxyde de silicium (SiO₂) de 300 nm est traité avec un silane hydrophobe (1H, 1H, 2H, 2H perfluorodécyl-trichlorosilane) pour rendre la surface hydrophobe.

Le protocole est le suivant : après traitement dans un mélange soude/eau/éthanol à 3,5 M pendant 2 heures à température ambiante pour générer les sites silanols, le substrat est placé pendant 10 minutes à température ambiante dans un mélange toluène anhydre/silane hydrophobe à 9 mM en concentration de silane. Il est ensuite lavé avec du toluène puis de l'acétone, puis de l'éthanol et finalement nettoyé aux ultrasons pendant 5 minutes dans l'éthanol. Le substrat est ensuite placé dans une étuve pendant 1 heure à 110°C. L'angle de contact mesuré avec l'eau est de 110°.

### Exemple 2 : fabrication d'une zone de capture constituée d'un matériau support disposé sur la surface active utilisable pour la mise en oeuvre du procédé de l'invention

Sur substrat de Si avec une couche de SiO₂ de 300 nm, réalisation d'étapes standard pour l'homme du métier de la microélectronique :
- dépôt de 300 nm de platine (Pt) par pulvérisation ;
- photolithographie dans une résine photosensible avec ouverture d'un motif circulaire relié à une bande d'arrivée de courants ;
- dans un réacteur à plasma, gravure ionique complète du Pt dans les zones sans résine ;
- retrait de la résine dans un bain d'acide nitrique ;
- dans un réacteur à plasma, dépôt chimique en phase vapeur de 500nm de SiO₂ ;
- photolithographie dans une résine photosensible avec ouverture du motif circulaire ;
- dans un réacteur à plasma, gravure ionique complète de 500nm de SiO₂ dans les zones sans résine ; et
- retrait de la résine dans un bain d'acide nitrique.

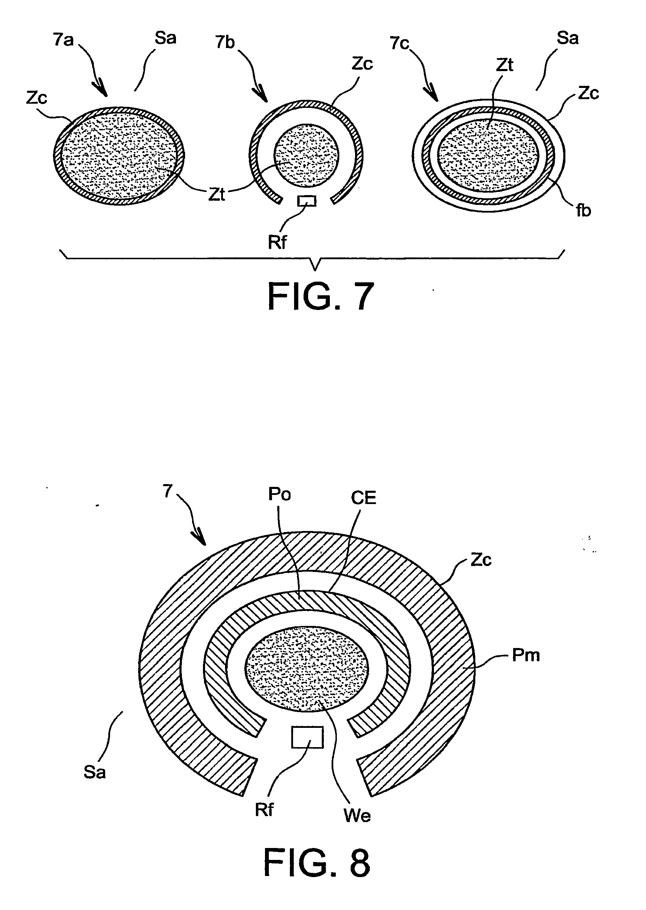

La figure 7a est une représentation schématique d'une zone de capture circulaire constituée d'un matériau support et entourant une zone de travail obtenue.

### Exemple 3 : fabrication d'une zone de capture constituée de silicium noir utilisable pour la mise en oeuvre du procédé de l'invention

Sur un substrat de Si (toutes ces étapes sont très bien connues de l'homme du métier de la microélectronique) :
- photolithographie dans une résine photosensible avec ouverture d'un motif en couronne ;
- dans un réacteur à plasma, gravure réactive ionique d'environ 3pm de silicium suivant le protocole décrit dans le document [11] pour former du silicium noir ;
- nettoyage de la surface en fin de gravure par passage dans un réacteur à plasma Plassys MDS 150 (société Plassis, France) avec les conditions suivantes : puissance 500W, temps de réaction 4 minutes, pression 21,33 Pa (160 mTorrs), débit d'oxygène 25cm³/min., température ambiante ; et
- retrait de la résine dans un bain d'acide nitrique.

Le silicium noir formé sur ces zones déterminées est fortement hydrophile, tandis que le silicium est sensiblement non mouillant vis-à-vis des liquides d'intérêt aqueux (échantillons).

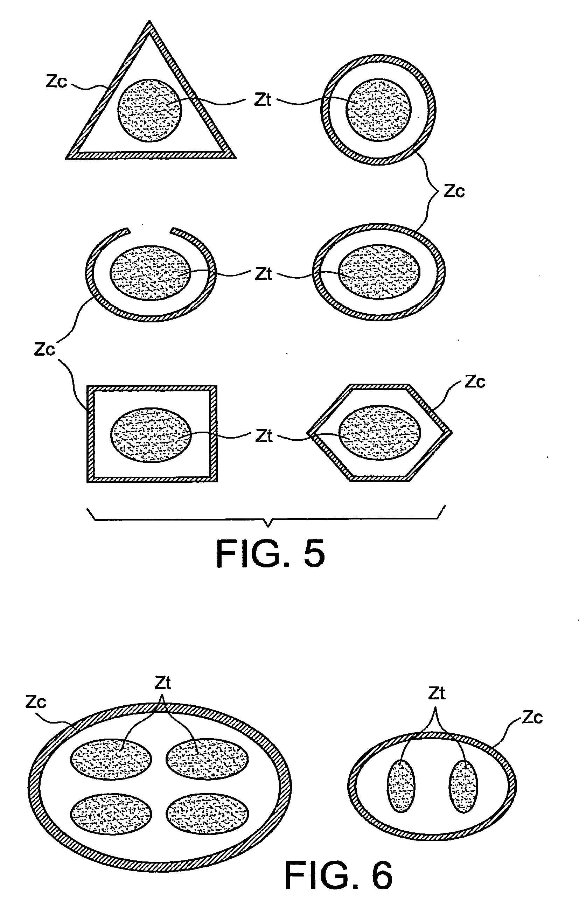

Les figures 5 et 6 montrent schématiquement différentes zones de captures formées autour de leur zone(s) de travail. La structuration fine a été réalisée de manière à créer une bande de silicium noir, ouverte ou fermée, qui constitue la zone de capture (Zc), autour d'une zone prévue pour former la zone de travail (Zt). Sur la figure 6, une zone de capture est aménagée autour de deux (à droite) ou quatre (à gauche) zones de travail.

La zone gravée ne nécessite pas d'autre modification chimique. Ce dispositif de l'invention est destiné à être utilisés avec des liquides d'intérêt aqueux.

### Exemple 4 : fabrication d'une zone de capture sous forme d'une électrode de capture par mouillage utilisable pour la mise en oeuvre du procédé de l'invention

### 4.1 ZONE DE CAPTURE SOUS FORME D'UNE ELECTRODE DE CAPTURE :

Sur un substrat de Si avec une couche de SiO₂ de 300 nm, les étapes suivantes sont réalisées :
α) Les mêmes étapes que dans l'exemple 2 sont réalisées pour disposer une électrode (matériau support) sur la surface active.
β) Réalisation de la surface active non mouillante vis-à-vis du liquide d'intérêt sur l'ensemble du substrat pour le rendre hydrophobe comme dans l'exemple 1. L'électrode est ensuite nettoyée par voie chimique avec une solution de soude/eau/éthanol. Pour ce faire, une goutte d'un mélange soude/eau/éthanol à 3,5 M est déposée sur les électrodes pendant 2 heures à température ambiante. Les électrodes sont ensuite lavées à l'eau puis séchées.
γ) Dans des expérimentations supplémentaires, une barrière hydrophile a été réalisée sur l'électrode par électropolymérisation en conditions potentiostatiques d'un pyrrole porteur de fonctions alcools (fonctions mouillantes vis-à-vis d'un liquide d'intérêt aqueux) en position 3. Ce polypyrrole est généré à partir d'une solution de pyrrole-3-éthanol 100 mM et de perchlorate de lithium (LiClO₄) 0,5 M. Un potentiel de 1 V vs Ag/AgCl/Cl⁻ est appliqué pendant 5 secondes. L'angle de contact mesuré avec l'eau sur l'électrode est de 53°.

La figure 7a est une représentation schématique d'un dispositif selon l'invention obtenu en utilisant le protocole de cet exemple. Sur cette figure, la zone de capture (Zc), entourant la zone de travail (Zt), est formée par une électrode recouverte d'un polypyrrole porteur de fonctions mouillantes (fonctions alcools).

### 4.2 ZONE DE CAPTURE SOUS FORME D'UNE BANDE MOUILLANTE :

Sur un substrat de Si avec une couche de SiO₂ de 300nm, les étapes suivantes ont été réalisées :
α) Réalisation de la surface active non mouillante vis-à-vis du liquide d'intérêt sur l'ensemble du substrat pour le rendre hydrophobe comme dans l'exemple 1.
β) Photolithographie dans une résine photosensible de type négative (référence NFR-015 du fournisseur Shipley) avec une ouverture d'un motif en couronne, pour former la zone de capture (ou bande mouillante) ;
γ) Destruction du silane hydrophobe dans les motifs ouverts de la résine photosensible par passage dans un réacteur à plasma Plassys MDS 150 (société Plassys, France) avec les conditions suivantes : puissance 500W, temps de réaction 4 minutes, pression 21,33 Pa (160 mTorrs), débit d'oxygène 25cm³/min., température ambiante ; et
δ) Réalisation de la zone de capture par silanisation avec un silane porteur de fonctions amines (fonctions mouillantes pour le liquide d'intérêt aqueux). Le substrat est placé dans une solution de γ-aminopropyl triéthoxysilane à 10% en volume dans l'éthanol. Après une nuit à température ambiante, le substrat est lavé à l'éthanol et enfin laissé pendant trois heures dans une étuve à 110°C.

### Exemple 5 : fabrication de zones de capture constituées de bordures utilisables pour la mise en oeuvre du procédé de l'invention

Sur une plaque neuve de silicium est effectuée une étape de photolithographie avec une résine épaisse photosensible Clariant AZ4562 (marque de commerce) de la manière suivante :
- dépôt d'un promoteur d'adhérence, qui est ici de l'hexaméthylènedisilazane, en four à 120°C,
- couchage de résine sur tournette à 1000 tour/minute pendant 30 s avec une accélération de 200 tours/minute/s,
- recuit sur plaque chauffante 115°C pendant 2 minutes,
- insolation sur machine d'insolation Karl Süss MA750 (marque de commerce) pendant 50 s en mode discontinu (5x10 secondes avec 5 secondes de pause) à travers un masque,
- développement dans une solution Shipley MF319 (marque de commerce) diluée dans les proportions 1:3 avec de l'eau désionisée,
- rinçage à l'eau désionisée et séchage sous flux d'azote,
- recuit sur plaque chauffante à 115°C pendant 3 minutes, puis à 150°C pendant 1 minute,
- mesure d'épaisseur : 13 µm.

Sur le masque utilisé pour l'insolation, tous les motifs représentent des anneaux dont les murets ont une largeur de 35 µm avec des combinaisons variées entre leur diamètre (100 à 1000 µm) et la distance inter-centre entre deux bordures (couronnes) (50 à 1000 µm).

3025 cuvettes (c) sur une surface de 1 centimètre carré ont pu être obtenues aisément.

La figure 11, à droite, représente schématiquement les zones de captures (Zc) obtenues, sous la forme de bordures. Ces zones de captures forment des cuvettes (c) capables de capturer une goutte (g) d'un liquide d'intérêt.

### Exemple 6 : Fabrication de zones de travail fonctionnalisées par une sonde utilisables dans le procédé de l'invention

Dans cet exemple, une zone de travail comprenant quatre électrodes est fabriquée et utilisée. Sur un substrat de Si avec une couche de SiO₂ de 300 nm, réalisation d'étapes standard pour l'homme du métier de la microélectronique :
- dépôt de 300 nm de platine (Pt) par pulvérisation ;
- photolithographie dans une résine photosensible avec ouverture des motifs de la microcellule, de l'électrode de capture et des bandes d'arrivée de courants ;
- dans un réacteur à plasma, gravure ionique complète du Pt dans les zones sans résine ;
- retrait de la résine dans un bain d'acide nitrique ;
- dans un réacteur à plasma, dépôt chimique en phase vapeur de 500nm SiO₂;
- photolithographie dans une résine photosensible avec ouverture des motifs des électrodes de la microcellule et de l'électrode de capture ;
- dans un réacteur à plasma, gravure ionique complète de 500nm de SiO₂ dans les zones sans résine ; et
- retrait de la résine dans un bain d'acide nitrique.

L'électrode de travail (We) (voir fig. 8), la contre-électrode (CE) et l'électrode annexe utilisée pour former la zone de capture (Zc) sont en platine (dépôt 5000 Å environ). Une électrode de référence Ag/AgCl/Cl⁻ (Rf) est également présente (voir figure 8).

Une électrode de référence Ag/AgCl/Cl⁻ (Rf) est également présente. Cette électrode est obtenue par dépôt d'argent sur le platine avec le protocole suivant :
- préparation de 10 ml de solution contenant AgNO₃ 0,2 M, Kl 2 M, Na₂S₂O₃ 0,5 mM ;
- un potentiel de -0,65 V vs ECS (électrode au calomel saturé) est imposé pendant 90 secondes (suivi par chronoampérométrie) sur l'électrode de référence. Un dépôt gris/blanc est obtenu. La zone de travail est ensuite rincée à l'eau ; et
- la zone de travail avec l'électrode modifiée précédemment est plongée dans une solution de HCl 0,1 M et on impose un potentiel de 0,5 V vs ECS pendant 30 secondes pour chlorer le dépôt d'argent. Le substrat est ensuite rincé à l'eau.

L'ensemble de chaque zone de travail a été silanisé avec un silane hydrophobe suivant le protocole décrit dans l'exemple 1.

La barrière hydrophile est réalisée sur l'électrode de capture selon le protocole décrit dans l'exemple 4.1-δ.

La contre-électrode (CE) est ensuite fonctionnalisée avec un copolymère conducteur pyrrole/pyrrole fonctionnalisé en position 1 par la fonction biologique (ici un oligonucléotide sonde) **[5]**. L'électropolymérisation est localisée sur la contre-électrode de la zone de travail.

Pour tester cette zone de travail, l'oligonucléotide sonde est hybridé avec un oligonucléotide cible (100 pM) porteur d'un marqueur enzymatique (HRP "Horse Radish Peroxidase") dans un tampon (NaCl 1 M/Tris 10 mM/EDTA 1 mM/Triton X100 0,05%). Après des lavages dans le même tampon mais sans triton, la solution de révélation (OPD + H₂O₂ + tampon phosphate-citrate 50 mM) est introduite sur le dispositif de la présente invention puis aspirée. Une fraction de liquides est bien laissée de manière localisée sur la zone de travail comme le montrent les photographies de la figure 9 :
- à gauche, avant que le dispositif ne soit recouvert de la solution de révélation, on distingue le dispositif de la présente invention sans la goutte ; et
- à droite, après que la solution de révélation ait été aspirée, on distingue le dispositif de la présente invention ayant capturé grâce à sa zone de capture (bande hydrophile) une goutte de la solution de révélation.

Après 5 minutes de révélation, le produit enzymatique est détecté par voltampérométrie pulsée différentielle sur l'électrode de mesure (WE). Les résultats de cette détection sont représentés par le graphique de la figure 10 annexée.

La figure 8 est une représentation schématique d'une microcellule électrochimique d'un dispositif selon l'invention obtenu en utilisant le protocole de cet exemple. Sur cette figure, la zone de travail est constituée de l'électrode de mesure ou électrode de travail (WE), du polymère conducteur porteur de l'oligonucléotide (Po) déposé sur la contre-électrode (CE) et de la zone de capture (Zc) formée par l'électrode la plus externe sur laquelle le polymère porteur des fonctions alcools a été déposé (Pm). L'ensemble est réalisé sur la surface active (Sa) non mouillante.

### Exemple 7 : Fabrication d'une boîte convenant à la mise en oeuvre du procédé de l'invention

Un capot creux en polydiméthylsiloxane (PDMS) est fabriqué par moulage sur un moule en verre avec un motif carré en surépaisseur de 1 mm.

Sur un dispositif de la présente invention plan comme ceux obtenus dans les exemples précédents, ce capot creux est fixé de manière hermétique par collage avec de la colle réticulant par insolation aux rayons ultraviolets (VITRALIT 6181). Les connexions pour les entrées et sorties des fluides sont réalisées par perçage du capot avec des aiguilles de faible diamètre. L'aiguille d'entrée est reliée à des tubes de transport de fluide et à une seringue pleine du liquide d'intérêt. L'ensemble final est testé pour détecter d'éventuelles fuites, sachant que le liquide doit passer uniquement par les connexions prévues à cet effet.

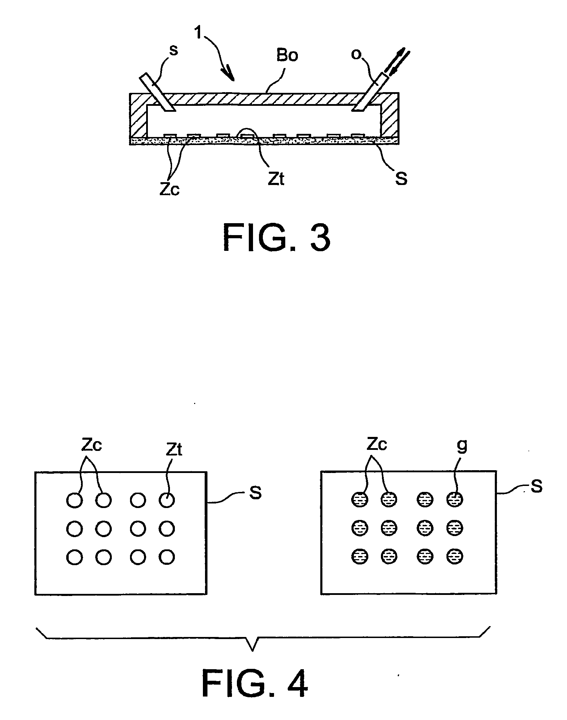

La figure 3 est une représentation schématique de la boîte obtenue dans cet exemple.

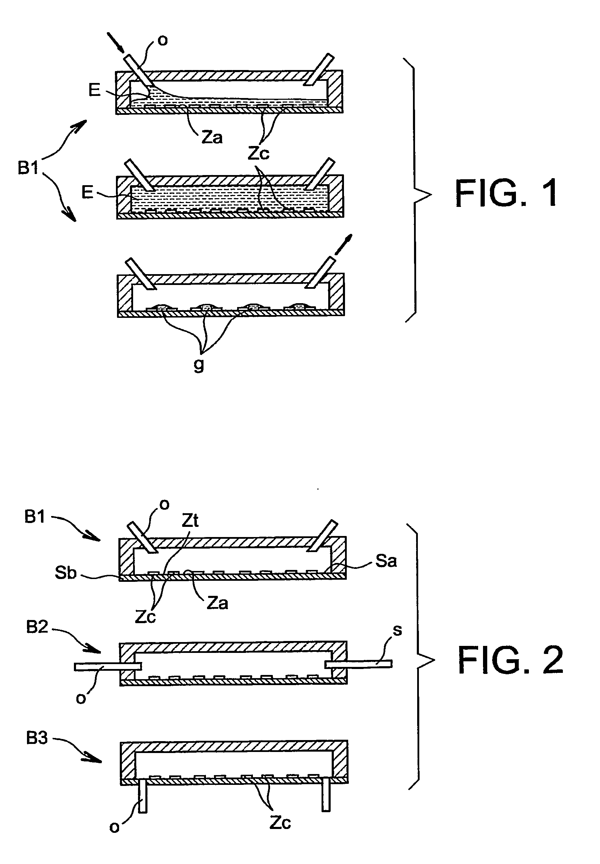

D'autres dispositions des connexions d'entrée et de sortie peuvent facilement être réalisées, et la figure 2 fournit des représentations schématiques de différentes boîtes. Sur cette figure, B1, B2 et B3 représentent trois types de boîtes selon l'invention avec des ouvertures d'entrée (o) et de sortie (s) placées différemment. Sb, Sa, Zc, Zt ont la même signification que sur les figures précitées. Les différents éléments qui la constituent la boîte de l'invention sont représentés de la même manière sur les trois schémas.

La figure 4 est une représentation schématique vue du dessus d'une surface active qui est utilisée pour fabriquer une boîte selon l'invention. Cette surface active comporte 12 zones de capture et 12 zones de travail correspondantes. La surface active est non mouillante vis-à-vis du substrat. Différentes formes de zones de capture utilisable pour la mise en oeuvre du procédé de l'invention ont été fabriquées, en particulier en anneau ou en disque. Elles sont représentées sur les figures 5 et 6.

### Exemple 8 : Mise en oeuvre du procédé de l'invention pour la répartition localisée de gouttes et résultats

La mise en oeuvre du procédé de l'invention est testée sur des boîtes fabriquées suivant l'exemple 7 précédent, avec les différentes zones de capture fabriquées suivant les exemples 2 à 6 ci-dessus.

La figure 1 représente le fonctionnement d'une boîte fermée avec une première ouverture (o) d'introduction du liquide d'intérêt dans la boîte, et une deuxième ouverture (s) d'extraction du liquide d'intérêt de la boîte : le liquide d'intérêt E est injecté dans la boîte (schéma du haut) par la première ouverture (o) jusqu'à remplissage (schéma du milieu), puis extrait par la deuxième ouverture (s) (schéma du bas). Le moyen d'injection utilisé est une seringue, et le moyen d'extraction utilisé est une seringue. Une matrice de gouttes (g) est obtenue sur la surface active comme représentée sur la figure 4 annexée, grâce aux zones de capture (Zc).

La figure 3 représente le fonctionnement d'une boîte fermée avec une première ouverture (o) d'introduction du liquide d'intérêt dans la boîte et d'extraction du liquide d'intérêt de la boîte, et une deuxième ouverture (s) laissant de l'air contenu dans la boite sortir lors de l'introduction du liquide d'intérêt dans celle-ci, et entrer dans la boite lors de l'extraction du liquide d'intérêt. Le liquide d'intérêt E est injecté puis extrait de la boîte par la une seule ouverture. Une matrice de gouttes (g) est obtenue comme représenté sur la figure 4 annexée.

Cet exemple montre qu'une matrice de gouttes (g) bien localisées sur les différentes zones de capture est obtenue grâce au procédé de la présente invention. Le remplissage de la boîte n'est pas obligatoire, pourvu que les différentes zones de capture soient couvertes par le liquide d'intérêt.

Des expérimentations réalisées avec différentes formes de zones de capture, comme les formes représentées sur les figures 5 et 6 montrent que ces zones de capture arrangées avec des zones de travail sont également fonctionnelles pour la mise en oeuvre du procédé de l'invention.

### Exemple 9 : Procédé de détection électrochimique

Une boîte est fabriquée suivant le protocole de l'exemple 7, avec des zones de capture et des zones de travail fabriquées suivant l'exemple 6.

Le liquide d'intérêt est constitué d'une solution de révélation comprenant le substrat de l'enzyme HRP : eau oxygénée (H₂O₂) et chromogène OPD (OrthoPhénylène Diamine). Cette solution est introduite dans la boîte fermée de manière à recouvrir les zones de capture, puis aspirée hors de cette boîte.

Des gouttes du liquide d'intérêt sont bien capturées par les zones de capture, et couvrent les zones de travail comme le montrent les photographies de la figure 9 annexée :
- à gauche, avant que la surface active ne soit recouverte du liquide d'intérêt : on distingue la zone de travail sans goutte ; et
- à droite, après que le liquide d'intérêt ait été aspiré : on distingue la zone de capture ayant capturé une goutte du liquide d'intérêt.

Après 5 minutes de repos servant à la révélation de la réaction enzymatique, le produit enzymatique est détecté par voltampérométrie pulsée différentielle. Les résultats de cette détection sont représentés sur le graphique de la figure 10 annexée.

La zone de capture entourant la zone de travail est donc bien fonctionnelle, et le procédé de l'invention permet bien de détecter un analyte dans chaque goutte capturée.

### Exemple 10 : Procédé d'électropolymérisation

Une boîte de travail est fabriquée suivant le protocole de l'exemple 7, avec des zones de capture et des zones de travail fabriquées suivant l'exemple 6.

Comme dans exemple 6 ci-dessus une polymérisation de pyrrole fonctionnalisé ou non a été obtenue de manière localisée aux gouttes capturées par les zones de capture.

### Liste des références

**[1]** WO 02/16023: Protogene Laboratories Inc.
**[2]** US 6,040,193: Affymetrix Inc.
**[3]** WO 99/03684 : Eapen Saji et col.
**[4]** Azek et al., Analytical Biochemistry, 2000, 284, 107-113.
**[5]** WO 00/36145 : Commissariat à l'Energie Atomique.
**[6]** WO 02/090573 : Infineon
**[7]** Junghoon Lee et al., "Electrowetting and Electrowetting-on-dielectric for microscale liquid handling", Sensor and Actuators A 95 (2002), 259-268.
**[8]** J. Cooper et al., "Micromachining Sensor for Electrochemical Measurement in Subnanoliter Volumes", Anal. Chem. 1997, 69, 253-258.
**[9]** Mengsu Yang et al., "Covalent Immobilisation of Oligonucleotides on Modified Glass/Silicon Surfaces for Solid-Phase DNA Hybridization and Amplification", Chemistry Letters 1998, 257-258.
**[10]** Mila Boncheva et al., "Design of Oligonucleotide Arrays at Interfaces" Langmuir 1999, 15, 4317-4320.
**[11]** H. Jansen et al., "The black silicon method : a universal method for determining the parameter setting of a fluorine-based reactive ion etcher in deep silicon trench etching with profile control", J. Micromech. Microeng. 5 (1995), 115-120.
**[12]** FR-A-2 818 662.
**[13]** EP-B-561 722.

## Revendications

1. Procédé de répartition localisée de gouttes d'un liquide d'intérêt sur une surface active d'un substrat, ledit procédé comprenant les étapes suivantes :
- une introduction du liquide d'intérêt dans une boîte via des moyens d'introduction, ladite boîte enfermant ladite surface active, et
- une extraction du liquide d'intérêt de ladite boîte via des moyens d'extraction,
ladite surface active ainsi que les autres surfaces à l'intérieur de la boîte étant sensiblement non mouillantes vis à vis du liquide d'intérêt à l'exception de plusieurs zones de capture localisées, formées de manière déterminée sur ladite surface active, qui sont chacune appropriées pour capturer une goutte du liquide d'intérêt,
lesdits moyens d'introduction et d'extraction du liquide d'intérêt dans la boîte étant disposés de telle manière que lorsque le liquide d'intérêt est introduit dans la boîte, il couvre lesdites zones de capture, et lorsque le liquide d'intérêt est extrait de la boîte, une goutte dudit liquide d'intérêt reste captive de manière répartie et localisée sur chaque zone de capture.

2. Procédé selon revendication 1, dans lequel chaque zone de capture est arrangée avec au moins une zone de travail formée sur ladite surface active de telle manière que cette zone de travail soit en contact avec la goutte de liquide d'intérêt captive.

3. Procédé selon la revendication 2, dans lequel au moins une zone de travail est une zone non mouillante vis-à-vis du liquide d'intérêt.

4. Procédé selon la revendication 2 ou 3, dans lequel au moins une zone de capture a une forme annulaire, ouverte ou fermée qui entoure la, au moins une, zone de travail arrangée avec elle.

5. Procédé selon la revendication 4, dans lequel la zone de capture de la goutte du liquide d'intérêt entoure plusieurs zones de travail.

6. Procédé selon l'une quelconque des revendications 1 à 5, dans lequel la zone de travail est une zone de détection d'une espèce chimique susceptible d'être présente dans le liquide d'intérêt.

7. Procédé selon la revendication 6, dans lequel la zone de travail est une zone fonctionnalisée par une sonde biologique.

8. Procédé selon la revendication 7, dans lequel la sonde est choisie dans le groupe constitué par une enzyme, un substrat d'enzyme, un oligonucléotide, un oligonucléoside, une protéine, un récepteur membranaire d'une cellule eucaryote ou procaryote, un anticorps, un antigène, une hormone, un métabolite d'un organisme vivant, une toxine d'un organisme vivant, un polynucléotide, un polynucléoside, un ADN complémentaire.

9. Procédé selon la revendication 6, dans lequel la zone de travail est une zone fonctionnalisée par une molécule chimique.

10. Procédé selon l'une quelconque des revendications 2 à 9, dans lequel la zone de travail est une zone d'interaction électrique et/ou chimique avec ladite goutte captive.

11. Procédé selon la revendication 10, dans lequel la zone de travail est une microcellule électrochimique.

12. Procédé selon l'une quelconque des revendications 2 à 9, dans lequel la zone de travail comprend un capteur choisi dans le groupe constitué des capteurs optiques, électriques, magnétiques, électrostatiques, mécaniques, thermiques et chimiques.

13. Procédé selon l'une quelconque des revendications 2 à 9, dans lequel la zone de travail comprend un actionneur choisi dans le groupe constitué des actionneurs optiques, électriques, magnétiques, électrostatiques, mécaniques, thermiques et chimiques.

14. Procédé selon l'une quelconque des revendications précédentes, dans lequel au moins une des zones de capture d'une goutte du liquide d'intérêt est une zone de capture électrique ou physique.

15. Procédé selon la revendication 14, dans lequel la zone de capture capture la goutte du liquide d'intérêt par des forces capillaires.

16. Procédé selon la revendication 14, dans lequel la zone de capture capture localement la goutte de liquide d'intérêt par mouillage.

17. Procédé selon la revendication 16, dans lequel la zone de capture capture localement la goutte de liquide d'intérêt du fait d'une mouillabilité de la zone de capture pour le liquide d'intérêt plus importante que celle de la surface active.

18. Procédé selon la revendication 16, dans lequel la zone de capture capture localement la goutte de liquide d'intérêt par électro-mouillage.

19. Procédé selon la revendication 14, dans lequel la zone de capture capture la goutte de liquide d'intérêt par des interactions de type hydrophile/hydrophobe avec le liquide d'intérêt.

20. Procédé selon l'une quelconque des revendications précédentes, dans lequel au moins une des zones de capture est en creux ou en saillie par rapport à la surface active sur laquelle elle est formée.

21. Procédé selon l'une quelconque des revendications précédentes, dans lequel les zones de capture localisées, réparties de manière déterminée sur ladite surface active, forment une matrice.

22. Procédé selon l'une quelconque des revendications précédentes, dans lequel les moyens d'extraction de liquide d'intérêt étant des moyens d'aspiration de celui-ci hors de la boîte, l'étape d'extraction consiste à aspirer le liquide d'intérêt de ladite boîte.

23. Procédé selon l'une quelconque des revendications précédentes, dans lequel les moyens d'extraction de liquide d'intérêt étant des moyens d'injection d'un fluide gazeux dans la boîte, l'étape d'extraction consiste à injecter un fluide gazeux dans la boîte de manière à expulser le liquide d'intérêt de ladite boîte.

24. Procédé selon la revendication 23, dans lequel le fluide gazeux injecté est saturé en vapeur de liquide d'intérêt.

25. Utilisation d'un procédé selon l'une quelconque des revendications précédentes dans un laboratoire sur puce ou dans un microsystème pour la chimie ou la biologie.

26. Utilisation d'un procédé selon l'une quelconque des revendications 1 à 25 dans une puce biologique choisie dans le groupe constitué des puces à ADN, des puces à ARN, des puces à protéines, des puces à anticorps, des puces à antigènes, des puces à cellule.

27. Procédé de détection d'au moins une molécule susceptible d'être présente dans un liquide d'intérêt, ledit procédé comprenant les étapes suivantes :
- répartition localisée de gouttes de liquide d'intérêt liquide sur une surface active dans une boîte suivant le procédé de la revendication 1, et
- détection électrochimique dans lesdites gouttes, de la, au moins une, molécule susceptible d'être présente dans ledit liquide d'intérêt.

28. Procédé de détection optique d'au moins une molécule susceptible d'être présente dans un liquide d'intérêt, ledit procédé comprenant les étapes suivantes :
- une répartition localisée de gouttes de liquide d'intérêt sur une surface active dans une boîte suivant le procédé de la revendication 1, et
- détection optique dans lesdites gouttes, de la, au moins une, molécule susceptible d'être présente dans ledit liquide d'intérêt.

29. Procédé selon la revendication 27 ou 28, dans lequel des détections de molécules différentes susceptibles d'être présentes dans le liquide d'intérêt sont réalisées en parallèle dans différentes gouttes de liquide d'intérêt captives sur ladite surface active dans la boîte.

30. Procédé d'électropolymérisation de molécules présentes dans un liquide d'intérêt, ledit procédé comprenant les étapes suivantes :
- répartition localisée de gouttes de liquide d'intérêt sur une surface active dans une boîte suivant le procédé de la revendication 1, et
- électropolymérisation dans ladite boîte, dans les gouttes dudit liquide d'intérêt, des molécules à polymériser.

## Claims

1. Process for the localized distribution of drops of a liquid of interest on an active surface of a substrate, said process comprising the following steps :
- introduction of the liquid of interest into a box via introduction means, said box enclosing said active surface, and
- extraction of the liquid of interest from said box via extraction means,
said active surface and also the other surfaces inside the box being substantially non-wetting with respect to the liquid of interest with the exception of several localized uptake areas, formed in a given manner on said active surface, which are each suitable for taking up a drop of the liquid of interest,
said means for introducing and for extracting the liquid of interest in the box being arranged such that when the liquid of interest is introduced into the box, it covers said uptake areas, and when the liquid of interest is extracted from the box, a drop of said liquid of interest remains captive in a distributed and localized manner on each uptake area.

2. Process according to Claim 1, in which each uptake area is arranged with at least one working area formed on said active surface such that this working area is in contact with the captive drop of the liquid of interest.

3. Process according to Claim 2, in which at least one working area is an area that is non-wetting with respect to the liquid of interest.

4. Process according to Claim 2 or 3, in which at least one uptake area has an open or closed ring shape that encircles the, at least one, working area arranged therewith.

5. Process according to Claim 4, in which the area for uptake of the drop of the liquid of interest encircles several working areas.

6. Process according to any one of Claims 1 to 5, in which the working area is an area for detection of a chemical species that may be present in the liquid of interest.

7. Process according to Claim 6, in which the working area is an area functionalized with a biological probe.

8. Process according to Claim 7, in which the probe is chosen from the group consisting of an enzyme, an enzyme substrate, an oligonucleotide, an oligonucleoside, a protein, a membrane receptor of a eukaryotic or prokaryotic cell, an antibody, an antigen, a hormone, a metabolite of a living organism, a toxin of a living organism, a polynucleotide, a polynucleoside or a complementary DNA.

9. Process according to Claim 6, in which the working area is an area functionalized with a chemical molecule.

10. Process according to any one of Claims 2 to 9, in which the working area is an area of electrical and/or chemical interaction with said captive drop.

11. Process according to Claim 10, in which the working area is an electrochemical microcell.

12. Process according to any one of Claims 2 to 9, in which the working area comprises a sensor chosen from the group consisting of optical, electrical, magnetic, electrostatic, mechanical, thermal and chemical sensors.

13. Process according to any one of Claims 2 to 9, in which the working area comprises an actuator chosen from the group consisting of optical, electrical, magnetic, electrostatic, mechanical, thermal and chemical actuators.

14. Process according to any one of the preceding claims, in which at least one of the areas for uptake of a drop of the liquid of interest is an electrical or physical uptake area.

15. Process according to Claim 14, in which the uptake area takes up the drop of the liquid of interest via capillary forces.

16. Process according to Claim 14, in which the uptake area locally takes up the drop of liquid of interest by wetting.

17. Process according to Claim 16, in which the uptake area locally takes up the drop of liquid of interest by means of a wettability of the uptake area for the liquid of interest that is greater than that of the active surface.

18. Process according to Claim 16, in which the uptake area locally takes up the drop of liquid of interest by electrowetting.

19. Process according to Claim 14, in which the uptake area takes up the drop of liquid of interest via interactions of hydrophilic/hydrophobic type with the liquid of interest.

20. Process according to any one of the preceding claims, in which at least one of the uptake areas is in relief or protrudes relative to the active surface on which it is formed.

21. Process according to any one of the preceding claims, in which the localized uptake areas, distributed in a given manner on said active surface, form a matrix.

22. Process according to any one of the preceding claims, in which, the means for extracting the liquid of interest being means for removing it from the box by suction, the extraction step consists in removing the liquid of interest from said box by suction.

23. Process according to any one of the preceding claims, in which, the means for extracting the liquid of interest being means for injecting a gaseous fluid into the box, the extraction step consists in injecting a gaseous fluid into the box so as to expel the liquid of interest from said box.

24. Process according to Claim 23, in which the gaseous fluid injected is saturated with vapour of the liquid of interest.

25. Use of a process according to any one of the preceding claims in a lab-on-chip or in a microsystem for chemistry or biology.

26. Use of a process according to any one of Claims 1 to 25 in a biochip chosen from the group consisting of DNA chips, RNA chips, protein chips, antibody chips, antigen chips and cell chips.

27. Process for detecting at least one molecule that may be present in a liquid of interest, said process comprising the following steps :
- localized distribution of drops of liquid of interest on an active surface in a box according to the process of Claim 1, and
- electrochemical detection in said drops of the, at least one, molecule that may be present in said liquid of interest.

28. Process for the optical detection of at least one molecule that may be present in a liquid of interest, said process comprising the following steps :
- localized distribution of drops of a liquid of interest on an active surface in a box according to the process of Claim 1, and
- optical detection in said drops of the, at least one, molecule that may be present in said liquid of interest.

29. Process according to Claim 27 or 28, in which detections of various molecules that may be present in the liquid of interest are performed in parallel in different drops of liquid of interest captive on said active surface in the box.

30. Process for the electropolymerization of molecules present in a liquid of interest, said process comprising the following steps :
- localized distribution of drops of liquid of interest on an active surface in a box according to the process of Claim 1, and
- electropolymerization in said box, in the drops of said liquid of interest, of the molecules to be polymerized.

## Patentansprüche

1. Verfahren zur lokalisierten Verteilung von Tropfen einer interessierenden Flüssigkeit auf einer aktiven Fläche eines Substrats, wobei das Verfahren die folgenden Schritte umfasst:
- eine Einleitung der interessierenden Flüssigkeit in eine Kammer mittels Einleiteinrichtungen, wobei die genannte Kammer die genannte aktive Fläche umschließt, und
- eine Entleerung der interessierenden Flüssigkeit aus der genannten Kammer durch Entleereinrichtungen,
wobei die aktive Fläche sowie die anderen Flächen im Innern der Kammer im Wesentlichen nicht benetzbar sind gegenüber der interessierenden Flüssigkeit, mit Ausnahme von mehreren in bestimmter Weise auf der genannten aktiven Fläche ausgebildeten lokalisierten Festhaltezonen, von denen sich jede zum Festhalten eines Tropfens der interessierenden Flüssigkeit eignet,
und die genannten Einleit- und Entleereinrichtungen der Kammer so vorgesehen sind, dass die interessierende Flüssigkeit, wenn sie in die Kammer eingeleitet worden ist, die genannten Festhaltezonen bedeckt, und wenn sie aus der Kammer abgeführt wird, auf jeder Festhaltezone auf verteilte und lokalisierte Weise ein Tropfen der interessierenden Flüssigkeit festgehalten wird.

2. Verfahren nach Anspruch 1, bei dem jede Festhaltezone mit wenigstens einer Arbeitszone versehen ist, die so auf der genannten aktiven Fläche ausgebildet ist, dass sie Kontakt hat mit dem festgehaltenen Tropfen der interessierenden Flüssigkeit.

3. Verfahren nach Anspruch 2, bei dem wenigstens eine Arbeitszone eine mit der interessierenden Flüssigkeit nicht benetzbare Zone ist.

4. Verfahren nach Anspruch 2 oder 3, bei dem wenigstens eine Festhaltezone die Form eines offenen oder geschlossenen Rings hat, der die wenigstens eine Arbeitszone umgibt, mit der sie versehen ist.

5. Verfahren nach Anspruch 4, bei dem die Festhaltezone des Tropfens der interessierenden Flüssigkeit mehrere Arbeitszonen umgibt.

6. Verfahren nach einem der Ansprüche 1 bis 5, bei dem die Arbeitszone eine Detektionszone einer in der interessierenden Flüssigkeit vorhandenen chemischen Spezies ist.

7. Verfahren nach Anspruch 6, bei dem die Arbeitszone eine durch eine biologische Sonde funktionalisierte Zone ist.

8. Verfahren nach Anspruch 7, bei dem die Sonde aus der Gruppe ausgewählt wird, die gebildet wird durch ein Enzym, ein Enzymsubstrat, ein Oligonukleotid, ein Oligonukleosid, ein Protein, einen Membranrezeptor eine eukaryote oder procaryote Zelle, einen Antikörper, ein Antigen, ein Hormon, einen Metabolit eines lebenden Organismus, ein Toxin eines lebenden Organismus, ein Polynukleotid, ein Polynukleosid, eine komplementäre DNA.

9. Verfahren nach Anspruch 6, bei dem die Arbeitszone eine durch ein chemisches Molekül funktionalisierte Zone ist.

10. Verfahren nach einem der Ansprüche 2 bis 9, bei dem die Arbeitszone eine Zone der elektrischen und/oder chemischen Wechselwirkung mit dem genannten festgehaltenen Tropfen ist.

11. Verfahren nach Anspruch 10, bei dem die Arbeitszone eine elektrochemische Mikrozelle ist.

12. Verfahren nach einem der Ansprüche 2 bis 9, bei dem die Arbeitszone einen Sensor umfasst, ausgewählt aus der Gruppe, die durch optische, elektrische, magnetische, elektrostatische, mechanische, thermische und chemische Sensoren gebildet wird.

13. Verfahren nach einem der Ansprüche 2 bis 9, bei dem die Arbeitszone einen Aktor umfasst, ausgewählt aus der Gruppe, die durch optische, elektrische, magnetische, elektrostatische, mechanische, thermische und chemische Aktoren gebildet wird.

14. Verfahren nach einem der vorangehenden Ansprüche, bei dem wenigstens eine der Zonen zum Festhalten eines Tropfens der interessierenden Flüssigkeit eine Zone zum elektrischen oder physischen Festhalten ist.

15. Verfahren nach Anspruch 14, bei dem die Festhaltezone den Tropfen der interessierenden Flüssigkeit durch Kapillarkräfte festhält.

16. Verfahren nach Anspruch 14, bei dem die Festhaltezone den Tropfen interessierender Flüssigkeit mittels Benetzung lokal festhält.

17. Verfahren nach Anspruch 16, bei dem die Festhaltezone den Tropfen interessierender Flüssigkeit lokal aufgrund einer Benetzbarkeit der Festhaltezone der interessierenden Flüssigkeit festhält, die stärker ist als diejenige der aktiven Fläche.

18. Verfahren nach Anspruch 16, bei dem die Festhaltezone den Tropfen interessierender Flüssigkeit mittels Elektrobenetzung lokal festhält.

19. Verfahren nach Anspruch 14, bei dem die Festhaltezone den Tropfen interessierender Flüssigkeit durch hydrophile/hydrophobe Wechselwirkungen mit der interessierenden Flüssigkeit festhält.

20. Verfahren nach einem der vorangehenden Ansprüche, bei dem wenigstens eine der Festhaltezonen in Bezug auf die aktive Fläche, in der sie ausgebildet ist, vertieft oder erhöht ist.

21. Verfahren nach einem der vorangehenden Ansprüche, bei dem die in bestimmter Weise auf der genannten aktiven Fläche verteilten lokalisierten Festhaltezonen eine Matrix bilden.

22. Verfahren nach einem der vorangehenden Ansprüche, bei dem die Einrichtungen zur Entleerung der interessierenden Flüssigkeit Saugeinrichtungen sind, wobei der Entleerungsschritt darin besteht, die interessierende Flüssigkeit aus der genannten Kammer zu saugen.

23. Verfahren nach einem der vorangehenden Ansprüche, bei dem die Entleereinrichtungen der interessierenden Flüssigkeit Einrichtungen zum Einspritzen eines gasförmigen Fluids in die Kammer sind, wobei der Entleerungsschritt darin besteht, ein gasförmiges Fluids in die Kammer einzuspritzen, um die interessierende Flüssigkeit aus der Kammer auszutreiben.

24. Verfahren nach Anspruch 23, bei dem das eingespritzte gasförmige Fluid mit dem Dampf der interessierenden Flüssigkeit gesättigt wird.

25. Anwendung eines Verfahrens nach einem der vorangehenden Ansprüche in einem On-Chip-Labor oder in einem Mikrosystem für Chemie oder Biologie.

26. Anwendung eines Verfahrens nach einem der Ansprüche 1 bis 25 in einem Biochip, ausgewählt aus der Gruppe, die durch DNA-Chips, RNA-Chips, Protein-Chips, Antikörper-Chips, Antigen-Chips, Zell-Chips gebildet wird.

27. Verfahren zur Detektion wenigstens eines in einer interessierenden Flüssigkeit möglicherweise vorhandenen Moleküls, wobei dieses Verfahren die folgenden Schritte umfasst:
- lokalisierte Verteilung von Tropfen einer interessierenden Flüssigkeit auf einer aktiven Fläche in einer Kammer gemäß dem Verfahren des Anspruchs 1, und
- elektrochemische Detektion in den genannten Tropfen des wenigstens einen in der genannten interessierenden Flüssigkeit möglicherweise vorhandenen Moleküls.

28. Verfahren zur optischen Detektion wenigstens eines in einer interessierenden Flüssigkeit möglicherweise vorhandenen Moleküls, wobei das genannte Verfahren die folgenden Schritte umfasst:
- eine lokalisierte Verteilung von Tropfen einer interessierenden Flüssigkeit auf einer aktiven Fläche in einer Kammer gemäß dem Verfahren des Anspruchs 1, und
- optische Detektion in den genannten Tropfen des wenigstens einen in der genannten interessierenden Flüssigkeit möglicherweise vorhandenen Moleküls.

29. Verfahren nach Anspruch 27 oder 28, bei dem Detektionen verschiedener in der interessierenden Flüssigkeit vorhandener Moleküle parallel in verschiedenen auf der aktiven Fläche in der Kammer festgehaltenen Flüssigkeitstropfen realisiert werden.

30. Elektropolymerisationsverfahren von in einer interessierenden Flüssigkeit vorhandenen Molekülen, wobei das Verfahren die folgenden Schritte umfasst:
- lokalisierte Verteilung von Tropfen einer interessierenden Flüssigkeit auf einer aktiven Fläche in einer Kammer gemäß dem Verfahren des Anspruchs 1, und
- Elektropolymerisation der zu polymerisierenden Moleküle in den Tropfen der genannten interessierenden Flüssigkeit in der genannten Kammer.
